# EUROPEAN PATENT APPLICATION

(11) **EP 4 615 023 A1**
(43) Date of publication of application: **10.09.2025**
(21) Application number: 23887708.8
(22) Date of filing: 10.10.2023
(51) Int. Cl.: H04W 8/20

(54) **COMMUNICATION METHOD AND APPARATUS**

(30) Priority: 11.11.2022 CN 202211413376
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: Körber, Martin Hans
(86) International application number: PCT/CN2023/123835
(87) International publication number: WO 2024/099016

(57) **Abstract**

Embodiments of this application provide a communication method and an apparatus. In the method, an application function network element may obtain willingness information of a terminal device, and determine, based on the willingness information, whether to select the terminal device to participate in a target service. In this way, user experience can be improved.

## Description

### CROSS-REFERENCE TO RELATED APPLICATIONS

This application claims priority to Chinese Patent Application No. 202211413376.6, filed with the China National Intellectual Property Administration on November 11, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

Many services at an application layer need to be completed by a terminal device, for example, federated learning (federated learning, FL) model training, user questionnaire survey, user experience report, service experience registration, and advertisement promotion survey. Currently, a first application function (application function, AF) network element that implements a service may usually determine, based on network data of a plurality of terminal devices that is obtained from a core network, application layer data of a plurality of terminal devices that is maintained by the first AF network element and/or another AF network element, and the like, a target terminal device participating in the service. In addition, the core network in a mobile communication system may further determine, based on the network data of the plurality of terminal devices, a list of candidate terminal devices participating in the service, or a list of target terminal devices participating in the service.

However, the target terminal device participating in the service is determined by the AF network element or the core network, and whether a user is willing to participate in the service is not considered. Consequently, user experience is poor.

### SUMMARY

This application provides a communication method and an apparatus, to determine, based on willingness information of a user, whether to select the user to participate in a target service, to improve user experience.

According to a first aspect, an embodiment of this application provides a communication method. The method may be applied to an application function network element. The method includes the following steps:

The application function network element obtains willingness information of a first terminal device, where the willingness information of the first terminal device indicates whether the first terminal device is willing to participate in a target service; and determines, based on the willingness information of the first terminal device, whether to select the first terminal device to participate in the target service.

According to the method, the application function network element can determine, based on the willingness information of the first terminal device, whether to select the first terminal device to participate in the target service, to improve user experience.

In a possible design, the application function network element may obtain the willingness information of the first terminal device in, but not limited to, the following manner:

The application function network element receives the willingness information of the first terminal device from a first network element or a second network element.

The first network element maintains the willingness configuration parameter of the first terminal device, the willingness configuration parameter represents willingness of the first terminal device to participate in the target service, and the first network element is different from the second network element.

For example, when the application function network element is deployed by a third party, the application function network element may obtain the willingness information of the first terminal device from the first network element through the second network element; or when the application function network element is deployed inside a mobile communication system, the application function network element may directly obtain the willingness information of the first terminal device from the first network element. According to this design, the application function network element may obtain the willingness information of the first terminal device from the first network element.

In a possible design, the application function network element may receive the willingness information of the first terminal device from the first network element or the second network element through the following steps:
sending a first request to the first network element or the second network element, where the first request includes an identifier of the first terminal device, and the first request is used to request the willingness information of the first terminal device; and receiving a first response from the first network element or the second network element, where the first response includes the willingness information of the first terminal device.

In a possible design, the first request further includes a service identifier of the target service and an execution rule of the target service. In this case, the willingness information of the first terminal device indicates whether the first terminal device is willing, under the execution rule of the target service, to participate in the target service.

In this design, the first network element or the second network element may determine the willingness information of the first terminal device according to the execution rule of the target service.

In a possible design, the first response further includes a willingness valid rule of the first terminal device. Based on this, before determining, based on the willingness information of the first terminal device, whether to select the first terminal device to participate in the target service, the application function network element may further determine, based on the willingness valid rule and the execution rule of the target service, that the willingness information of the first terminal device is valid.

According to this design, the application function network element may determine, based on the willingness information of the first terminal device only when determining that the willingness information of the first terminal device is valid, whether to select the first terminal device to participate in the target service. In this way, it can be avoided that the determining of the application function network element goes against the willingness of the first terminal device, affecting user experience.

According to this design, the application function network element may further obtain the willingness information of the first terminal device through the following steps:
obtaining a willingness configuration parameter of the first terminal device, where the willingness configuration parameter of the first terminal device represents that the first terminal device participates in a service of the target service; and determining the willingness information of the first terminal device based on the willingness configuration parameter.

According to this design, the application function network element may analyze or process the willingness configuration parameter of the first terminal device, to obtain the willingness information of the first terminal device.

In a possible design, the application function network element may further determine a willingness valid rule of the first terminal device based on the willingness configuration parameter. Based on this, before determining, based on the willingness information of the first terminal device, whether to select the first terminal device to participate in the target service, the application function network element may further determine, based on the willingness valid rule and the execution rule of the target service, that the willingness information of the first terminal device is valid.

In a possible design, the application function network element may obtain the willingness configuration parameter of the first terminal device in, but not limited to, the following manner:
receiving the willingness configuration parameter of the first terminal device from a first network element or a second network element, where the first network element maintains the willingness configuration parameter of the first terminal device, the willingness configuration parameter represents willingness of the first terminal device to participate in the target service, and the first network element is different from the second network element.

According to this design, the application function network element may directly request the willingness configuration parameter of the first terminal device from the first network element, or request the willingness configuration parameter of the first terminal device from the first network element through the second network element.

In a possible design, the application function network element may receive the willingness configuration parameter of the first terminal device from the first network element or the second network element through the following steps:
sending a second request to the first network element or the second network element, where the second request includes an identifier of the first terminal device, and the second request is used to request the willingness configuration parameter of the first terminal device; and receiving a second response from the first network element or the second network element, where the second response includes the willingness configuration parameter of the first terminal device.

In a possible design, the application function network element may determine, based on the willingness valid rule and the execution rule of the target service, that the willingness information of the first terminal device is valid through the following steps:
if the willingness valid rule includes a willingness valid time period, and the execution rule of the target service includes a service execution time period, when the service execution time period is within the willingness valid time period, the application function network element determines that the willingness information of the first terminal device is valid; or
if the willingness valid rule includes a willingness valid area, and the execution rule of the target service includes a service execution area, the application function network element obtains a physical location of the first terminal device, and when the physical location is within the willingness valid area and the service execution area is within the willingness valid area, the application function network element determines that the willingness information of the first terminal device is valid; or
if the willingness valid rule includes a willingness valid time period and a willingness valid area, and the execution rule of the target service includes a service execution time period and a service execution area, the application function network element obtains a physical location of the first terminal device, and when the service execution time period is within the willingness valid time period, the physical location is within the willingness valid area, and the service execution area is within the willingness valid area, the application function network element determines that the willingness information of the first terminal device is valid.

In a possible design, the first network element is a data storage network element, and the second network element is a network exposure function network element.

In a possible design, the application function network element may further obtain network data and/or application layer data of a plurality of second terminal devices; and determine, in the plurality of second terminal devices based on the network data and/or the application layer data of the plurality of second terminal devices, the first terminal device that is a candidate for participating in the target service.

According to this design, the application function network element may perform the foregoing process when determining that the first terminal device is a candidate terminal device participating in the target service.

In a possible design, the application function network element may determine, based on the willingness information of the first terminal device, whether to select the first terminal device to participate in the target service through the following steps:
if the willingness information of the first terminal device indicates that the first terminal device is unwilling to participate in the target service, determining not to select the first terminal device to participate in the target service; or
if the willingness information of the first terminal device indicates that the first terminal device is willing to participate in the target service, obtaining network data and/or application layer data of the first terminal device, and determining, based on the network data and/or the application layer data of the first terminal device, whether to select the first terminal device to participate in the target service; or if the willingness information of the first terminal device indicates that the first terminal device is willing to participate in the target service, selecting the first terminal device to participate in the target service.

According to this design, the application function network element may determine, based on the willingness of the first terminal device, whether the first terminal device participates in the target service, to improve user experience.

In a possible design, the application function network element may further obtain willingness information of a third terminal device, where the willingness information of the third terminal device indicates whether the third terminal device is willing to participate in the target service; and send the willingness information of the third terminal device to the first network element. Optionally, the application function network element may send the willingness information of the third terminal device to the first network element by using the method provided in the first aspect.

According to this design, the application function network element can not only query for willingness information or a willingness configuration parameter of a terminal device, but also configure obtained willingness information of another terminal device into the first network element.

In a possible design, the application function network element may send the willingness information of the third terminal device to the first network element in the following manners:
Manner 1: The application function network element sends a first message to the second network element, to enable the second network element to send a second message to the first network element based on the first message, where the first message and the second message include the willingness information of the third terminal device and the identifier of the third terminal device.
Manner 2: The application function network element sends a third message to the first network element, where the third message includes the willingness information of the third terminal device and an identifier of the third terminal device.

In a possible design, the first message, the second message, and the third message may further include a willingness valid rule of the third terminal device.

According to a second aspect, an embodiment of this application provides a communication method. The method may be applied to a first network element. The method includes the following steps.

The first network element receives a request message, where the request message includes an identifier of a first terminal device. The first network element determines a willingness configuration parameter of the first terminal device based on the identifier of the first terminal device, where the willingness configuration parameter of the first terminal device represents willingness of the first terminal device to participate in a target service. Finally, the first network element sends a response message, where the response message includes willingness information of the first terminal device or the willingness configuration parameter of the first terminal device, the willingness information of the first terminal device is obtained through configuration based on the willingness of the first terminal device, and the willingness information of the first terminal device indicates whether the first terminal device is willing to participate in the target service.

According to the method, another device may query the first network element for willingness configuration parameter or the willingness information of the first terminal device.

In a possible design, the request message further includes a service identifier of the target service and an execution rule of the target service. Based on this, that the first network element determines the willingness configuration parameter of the first terminal device based on the identifier of the first terminal device includes: determining the willingness configuration parameter of the first terminal device based on the identifier of the first terminal device and the service identifier of the target service. When the response message includes the willingness information of the first terminal device, before sending the response message, the first network element may further determine the willingness information of the first terminal device through the following steps:
determining configured willingness information of the first terminal device and a willingness valid rule of the first terminal device based on the willingness configuration parameter of the first terminal device, where the configured willingness information of the first terminal device indicates that whether the first terminal device is willing to participate in the target service is configured in the willingness configuration parameter; and determining the willingness information of the first terminal device based on the configured willingness information of the first terminal device, the willingness valid rule, and the execution rule of the target service, where the willingness information of the first terminal device indicates whether the first terminal device is willing, under the execution rule of the target service, to participate in the target service.

According to this design, the willingness information that is of the first terminal device and that is determined by the first network element may indicate whether the first terminal device is willing, under the execution rule of the target service, to participate in the target service. In this way, after the first network element sends the willingness information of the first terminal device to the application function network element, the application function network element may directly determine, based on the willingness information of the first terminal device, whether to select the first terminal device to participate in the target service, without determining whether the willingness information is valid.

In a possible design, when the execution rule of the target service meets the willingness valid rule, the configured willingness information of the first terminal device is the same as the willingness information of the first terminal device; or
when the execution rule of the target service does not meet the willingness valid rule, the configured willingness information of the first terminal device is different from the willingness information of the first terminal device.

In a possible design, according to different content included in the willingness valid rule and the execution rule of the target service, forms in which the execution rule of the target service meets the willingness valid rule are also different. Details are as follows:
when the willingness valid rule includes a willingness valid time period and the execution rule of the target service includes a service execution time period, that the execution rule of the target service meets the willingness valid rule includes: the service execution time period is within the willingness valid time period; or
when the willingness valid rule includes a willingness valid area, and the execution rule of the target service includes a service execution area, that the execution rule of the target service meets the willingness valid rule includes: the service execution area is within the willingness valid area; or
when the willingness valid rule includes a willingness valid time period and a willingness valid area, and the execution rule of the target service includes a service execution time period and a service execution area, that the execution rule of the target service meets the willingness valid rule includes: the service execution time period is within the willingness valid time period, and the service execution area is within the willingness valid area.

In a possible design, when the response message includes the willingness information of the first terminal device, before sending the response message, the first network element may further determine the willingness information of the first terminal device through the following steps:
determining configured willingness information of the first terminal device based on the willingness configuration parameter of the first terminal device, where the configured willingness information of the first terminal device indicates that whether the first terminal device is willing to participate in the target service is configured in the willingness configuration parameter; and using the configured willingness information of the first terminal device as the willingness information of the first terminal device.

In addition, the first network element may further determine the willingness valid rule of the first terminal device based on the willingness configuration parameter of the first terminal device, where the response message further includes the willingness valid rule of the first terminal device.

According to this design, the first network element may send the configured willingness information to the application function network element. In addition, the willingness valid rule may be further sent to the application function network element, so that the application function network element may determine, based on the willingness valid rule and the execution rule of the target service, whether the configured willingness information of the first terminal device is valid. In this way, the application function network element may determine, based on the willingness information of the first terminal device only when determining that the willingness information of the first terminal device is valid, whether to select the first terminal device to participate in the target service. In this way, it can be avoided that the determining of the application function network element goes against the willingness of the first terminal device, affecting user experience.

In a possible design, the first network element is a data storage network element.

In a possible design, that the first network element receives the request message includes: The first network element receives a first request from the application function network element, where the first request is used to request the willingness information of the first terminal device; and correspondingly, that the first network element sends the response message includes: The first network element sends a first response to the application function network element, where the first response includes the willingness information of the first terminal device.

In a possible design, that the first network element receives the request message includes: The first network element receives a second request from the application function network element, where the second request is used to request the willingness configuration parameter of the first terminal device; and correspondingly, that the first network element sends the response message includes: The first network element sends a second response to the application function network element, where the second response includes the willingness configuration parameter of the first terminal device.

In a possible design, that the first network element receives the request message includes: The first network element receives a third request from the second network element, where the third request is used to request the willingness configuration parameter of the first terminal device; and correspondingly, that the first network element sends the response message includes: The first network element sends a third response to the second network element, where the third response includes the willingness configuration parameter of the first terminal device, and the second network element is a network exposure function network element.

In a possible design, that the first network element receives the request message includes: The first network element receives a fourth request from the second network element, where the fourth request is used to request the willingness information of the first terminal device; and correspondingly, that the first network element sends the response message includes: The first network element sends a fourth response to the second network element, where the fourth response includes the willingness information of the first terminal device, and the second network element is a network exposure function network element.

In a possible design, that the first network element receives the request message includes: The first network element receives a fifth request from the second network element, where the fifth request is used to request the willingness configuration parameter of the first terminal device; and correspondingly, that the first network element sends the response message includes: The first network element sends a fifth response to the second network element, where the fifth response includes the willingness configuration parameter of the first terminal device, and the second network element is a network exposure function network element.

According to a third aspect, an embodiment of this application provides a communication method. The method may be applied to a second network element. The method includes the following steps.

The second network element receives a first request from an application function network element, where the first request includes an identifier of a first terminal device, and the first request is used to request willingness information of the first terminal device. The second network element sends a fifth request to a first network element, where the fifth request includes the identifier of the first terminal device, and the fifth request is used to request a willingness configuration parameter of the first terminal device. The second network element receives a fifth response from the first network element, where the fifth response includes the willingness configuration parameter of the first terminal device. The second network element determines the willingness information of the first terminal device based on the willingness configuration parameter of the first terminal device. The second network element sends a first response to the application function network element, where the first response includes the willingness information of the first terminal device.

According to the method, after receiving the request from the application function network element for querying for the willingness information of the first terminal device, the second network element may request the first network element to query for the willingness configuration parameter of the first terminal device; after obtaining the willingness configuration parameter of the first terminal device through query, analyze and process the willingness configuration parameter to obtain the willingness information of the first terminal device; and finally return the willingness information of the first terminal device to the application function network element.

In a possible design, the first request further includes a service identifier of a target service and an execution rule of the target service; and the fifth request further includes the service identifier of the target service. Based on this, the second network element may determine the willingness information of the first terminal device based on the willingness configuration parameter of the first terminal device through the following steps:
determining configured willingness information of the first terminal device and a willingness valid rule of the first terminal device based on the willingness configuration parameter of the first terminal device, where the configured willingness information of the first terminal device indicates that whether the first terminal device is willing to participate in the target service is configured in the willingness configuration parameter; and determining the willingness information of the first terminal device based on the configured willingness information of the first terminal device, the willingness valid rule of the first terminal device, and the execution rule of the target service, where the willingness information of the first terminal device indicates whether the first terminal device is willing, under the execution rule of the target service, to participate in the target service.

According to this design, the willingness information that is of the first terminal device and that is determined by the second network element may indicate whether the first terminal device is willing, under the execution rule of the target service, to participate in the target service. In this way, after the second network element sends the willingness information of the first terminal device to the application function network element, the application function network element may directly determine, based on the willingness information of the first terminal device, whether to select the first terminal device to participate in the target service, without determining whether the willingness information is valid.

In a possible design, when the execution rule of the target service meets the willingness valid rule of the first terminal device, content indicated by the willingness information of the first terminal device is the same as content indicated by the configured willingness information of the first terminal device; or when the execution rule of the target service does not meet the willingness valid rule of the first terminal device, content indicated by the willingness information of the first terminal device is different from content indicated by configured willingness indication information of the first terminal device.

In a possible design, according to different content included in the willingness valid rule and the execution rule of the target service, forms in which the execution rule of the target service meets the willingness valid rule are also different. Details are as follows:
when the willingness valid rule of the first terminal device includes a willingness valid time period and the execution rule of the target service includes a service execution time period, that the execution rule of the target service meets the willingness valid rule of the first terminal device includes: the service execution time period is within the willingness valid time period; or
when the willingness valid rule of the first terminal device includes a willingness valid area, and the execution rule of the target service includes a service execution area, that the execution rule of the target service meets the willingness valid rule of the first terminal device includes: the service execution area is within the willingness valid area; or
when the willingness valid rule of the first terminal device includes a willingness valid time period and a willingness valid area, and the execution rule of the target service includes a service execution time period and a service execution area, that the execution rule of the target service meets the willingness valid rule of the first terminal device includes: the service execution time period is within the willingness valid time period, and the service execution area is within the willingness valid area.

In a possible design, the second network element may determine the willingness information of the first terminal device based on the willingness configuration parameter of the first terminal device through the following steps: determining configured willingness information of the first terminal device based on the willingness configuration parameter of the first terminal device, where the configured willingness information of the first terminal device indicates that whether the first terminal device is willing to participate in the target service is configured in the willingness configuration parameter; and using the configured willingness information of the first terminal device as the willingness information of the first terminal device. Based on this, the second network element may further determine the willingness valid rule of the first terminal device based on the willingness configuration parameter of the first terminal device. In this case, the first response further includes the willingness valid rule of the first terminal device.

According to this design, the second network element may send the configured willingness information to the application function network element. In addition, the willingness valid rule may be further sent to the application function network element, so that the application function network element may determine, based on the willingness valid rule and the execution rule of the target service, whether the configured willingness information of the first terminal device is valid. In this way, the application function network element may determine, based on the willingness information of the first terminal device only when determining that the willingness information of the first terminal device is valid, whether to select the first terminal device to participate in the target service. In this way, it can be avoided that the determining of the application function network element goes against the willingness of the first terminal device, affecting user experience.

In a possible design, the first network element is a data storage network element, and the second network element is a network exposure function network element.

According to a fourth aspect, an embodiment of this application provides a communication method. The method may be applied to a first device. The method includes the following steps.

The first device obtains willingness information of a first terminal device, where the willingness information of the first terminal device indicates whether the first terminal device is willing to participate in a target service. The first device sends the willingness information of the first terminal device to a first network element.

According to the method, the first device may configure the willingness information of the terminal device onto a network side. In this way, an application function network element may obtain the willingness information of the terminal device through interaction with the network side, and determine, with reference to the willingness information of the terminal device, whether to select the terminal device to participate in a specific service, to ensure user experience.

In a possible design, the first device may send the willingness information of the first terminal device to the first network element in the following manners:
Manner 1: The first device sends a fourth message to a third network element, so that the third network element sends a fifth message to the first network element based on the fourth message, where the fourth message and the fifth message include the willingness information of the first terminal device and an identifier of the first terminal device.
Manner 2: The first device sends a sixth message to the first network element, where the sixth message includes the willingness information of the first terminal device and the identifier of the first terminal device.

According to this design, the first device may directly send the willingness information of the first terminal device to the first network element, or send the willingness information of the first terminal device to the first network element through the third network element.

In a possible design, the fourth message, the fifth message, or the sixth message further includes willingness association information of the first terminal device, where the willingness association information includes at least one of the following: a service identifier of the target service or a willingness valid rule of the first terminal device.

According to this design, the first device may further synchronously configure the willingness association information of the first terminal device into the first network element for storage.

In a possible design, the willingness valid rule includes: a willingness valid time period or a willingness valid area.

In a possible design, the first device is the first terminal device or the application function network element. When the first device is the application function network element, the third network element is a network exposure function network element. When the first device is the first terminal device, the third network element is an access and mobility management network element. The first network element is a data storage network element.

According to this design, the foregoing method may be applied to a mobile communication system scenario. A terminal device or an application function network element in a mobile communication system may send willingness information of a terminal device to a data storage network element.

In a possible design, when the first device is the application function network element, the first device may obtain the willingness information of the first terminal device through the following steps:
The first device sends a sixth request to the first terminal device, where the sixth request is used to request the willingness information of the first terminal device; and receives a sixth response from the first terminal device, where the sixth response includes the willingness information of the first terminal device.

According to this design, the application function network element may request the willingness information of the first terminal device from the first terminal device.

In a possible design, before the first device obtains the willingness information of the first terminal device, the first device may further determine at least one candidate terminal device participating in the target service, where the at least one candidate terminal device includes the first terminal device.

According to this design, the application function network element may obtain the willingness information of the first terminal device when determining that the first terminal device is a candidate terminal device participating in the target service.

In a possible design, when the first device is the first terminal device, the first device may obtain the willingness information of the first terminal device in, but not limited to, the following two manners:
Manner 1: The first device obtains the willingness information that is of the first terminal device and that is configured by a user.
Manner 2: The first device receives a sixth request from the application function network element, and obtains, based on the sixth request, the willingness information that is of the first terminal device and that is configured by the user, where the sixth request is used to request the willingness information of the first terminal device.

According to this design, the first terminal device may obtain, in a plurality of manners, the willingness information of the first terminal device to participate in the target service.

In a possible design, the first device may further send a sixth response to the application function network element, where the sixth response includes the willingness information of the first terminal device.

According to this design, the first terminal device may further notify the application function network element of the willingness information of the first terminal device.

In a possible design, the first request includes at least one of the following: the service identifier of the target service, an execution rule of the target service, or a volume of data whose transmission is for performing the target service.

According to this design, the first terminal device may determine the willingness information of the first terminal device with reference to the foregoing content.

According to a fifth aspect, an embodiment of this application provides a communication method. The method may be applied to a first network element. The method includes the following steps.

The first network element receives willingness information of a first terminal device, where the willingness information of the first terminal device indicates whether the first terminal device is willing to participate in a target service. The first network element maintains a willingness configuration parameter of the first terminal device based on the willingness information of the first terminal device, where the willingness configuration parameter of the first terminal device represents willingness of the first terminal device to participate in the target service.

According to the method, the first network element may maintain the willingness configuration parameter of the terminal device, so that another device can subsequently query for the willingness information or the willingness configuration parameter of the first terminal device.

In a possible design, the first network element may receive the willingness information of the first terminal device in the following manners:
Manner 1: The first network element receives the willingness information of the first terminal device from a first device.
Manner 2: The first network element receives the willingness information of the first terminal device from a second network element.

In a possible design, the first network element may receive the willingness information of the first terminal device from the first device through the following step:
receiving a sixth message from the first device, where the sixth message includes the willingness information of the first terminal device and an identifier of the first terminal device.

In a possible design, the first network element may receive the willingness information of the first terminal device from the second network element through the following step:
receiving a fifth message from the second network element, where the fifth message includes the willingness information of the first terminal device and the identifier of the first terminal device, and the fifth message is used to request to maintain the willingness configuration parameter of the first terminal device based on the willingness information of the first terminal device.

In a possible design, the first device is the first terminal device or an application function network element, the second network element is a network exposure function network element or an access and mobility management network element, and the first network element is a data storage network element.

In a possible design, the first network element may further receive willingness association information of the first terminal device, where the willingness association information includes at least one of the following: a service identifier of the target service, or a willingness valid rule of the first terminal device. Based on this, the maintaining the willingness configuration parameter of the first terminal device based on the willingness information of the first terminal device includes: maintaining the willingness configuration parameter of the first terminal device based on the willingness information of the first terminal device and the willingness association information.

In a possible design, the willingness valid rule includes: a willingness valid time period or a willingness valid area.

According to a sixth aspect, an embodiment of this application provides a communication method. The method includes the following steps.

A first device obtains willingness information of a first terminal device, where the willingness information of the first terminal device indicates whether the first terminal device is willing to participate in a target service. The first device sends a fourth message to a third network element, where the fourth message includes the willingness information of the first terminal device and an identifier of the first terminal device. After receiving the fourth message from the first device, the third network element sends a fifth message to a first network element, where the fifth message includes the willingness information of the first terminal device and the identifier of the first terminal device, and the fifth message is used to request to maintain a willingness configuration parameter of the first terminal device based on the willingness information of the first terminal device. The first network element receives the fifth message from the third network element. The first network element maintains the willingness configuration parameter of the first terminal device based on the willingness information of the first terminal device, where the willingness configuration parameter of the first terminal device represents willingness of the first terminal device to participate in the target service.

According to a seventh aspect, an embodiment of this application provides a communication system. The system includes:
a first device, configured to obtain willingness information of a first terminal device, where the willingness information of the first terminal device indicates whether the first terminal device is willing to participate in a target service; and send a fourth message to a third network element, where the fourth message includes the willingness information of the first terminal device and an identifier of the first terminal device;
the third network element, configured to send, after receiving the fourth message from the first device, a fifth message to a first network element, where the fifth message includes the willingness information of the first terminal device and the identifier of the first terminal device, and the fifth message is used to request to maintain a willingness configuration parameter of the first terminal device based on the willingness information of the first terminal device; and
the first network element, configured to receive the fifth message from the third network element, and maintain the willingness configuration parameter of the first terminal device based on the willingness information of the first terminal device, where the willingness configuration parameter of the first terminal device represents willingness of the first terminal device to participate in the target service.

According to an eighth aspect, an embodiment of this application provides a communication method. The method includes the following steps.

A first device obtains willingness information of a first terminal device, where the willingness information of the first terminal device indicates whether the first terminal device is willing to participate in a target service. The first device sends a sixth message to a first network element, where the sixth message includes the willingness information of the first terminal device and an identifier of the first terminal device. The first network element receives the sixth message from the first device. The first network element maintains a willingness configuration parameter of the first terminal device based on the willingness information of the first terminal device, where the willingness configuration parameter of the first terminal device represents willingness of the first terminal device to participate in the target service.

According to a ninth aspect, an embodiment of this application provides a communication system. The system includes:
a first device, configured to obtain willingness information of a first terminal device, where the willingness information of the first terminal device indicates whether the first terminal device is willing to participate in a target service; and the first device sends a sixth message to a first network element, where the sixth message includes the willingness information of the first terminal device and an identifier of the first terminal device; and
the first network element, configured to receive the sixth message from the first device, and maintain a willingness configuration parameter of the first terminal device based on the willingness information of the first terminal device, where the willingness configuration parameter of the first terminal device represents willingness of the first terminal device to participate in the target service.

According to a tenth aspect, an embodiment of this application provides a communication method. The method includes the following steps.

An application function network element sends a first request to a second network element, where the first request includes an identifier of a first terminal device, and the first request is used to request willingness information of the first terminal device. After receiving the first request from the application function network element, the second network element sends a fourth request to a first network element, where the fourth request includes the identifier of the first terminal device, and the fourth request is used to request the willingness information of the first terminal device. The first network element receives the fourth request from the second network element, and determines a willingness configuration parameter of the first terminal device based on the identifier of the first terminal device. The first network element determines the willingness information of the first terminal device based on the willingness configuration parameter of the first terminal device, where the willingness configuration parameter of the first terminal device represents willingness of the first terminal device to participate in a target service, and the willingness information of the first terminal device indicates whether the first terminal device is willing to participate in the target service. The first network element sends a fourth response to the second network element, where the fourth response includes the willingness information of the first terminal device. After receiving the fourth response from the first network element, the second network element sends a first response to the application function network element, where the first response includes the willingness information of the first terminal device. The application function network element receives the first response from the second network element. The application function network element determines, based on the willingness information of the first terminal device, whether to select the first terminal device to participate in the target service.

According to an eleventh aspect, an embodiment of this application provides a communication system. The system includes:
an application function network element, configured to send a first request to a second network element, where the first request includes an identifier of a first terminal device, and the first request is used to request willingness information of the first terminal device;
the second network element, configured to send, after receiving the first request from the application function network element, a fourth request to a first network element, where the fourth request includes the identifier of the first terminal device, and the fourth request is used to request the willingness information of the first terminal device; and
the first network element, configured to receive the fourth request from the second network element; determine a willingness configuration parameter of the first terminal device based on the identifier of the first terminal device; determine the willingness information of the first terminal device based on the willingness configuration parameter of the first terminal device, where the willingness configuration parameter of the first terminal device represents willingness of the first terminal device to participate in a target service, and the willingness information of the first terminal device indicates whether the first terminal device is willing to participate in the target service; and send a fourth response to the second network element, where the fourth response includes the willingness information of the first terminal device, where
the second network element is further configured to send, after receiving the fourth response from the first network element, a first response to the application function network element, where the first response includes the willingness information of the first terminal device; and
the application function network element is further configured to receive the first response from the second network element; and determine, based on the willingness information of the first terminal device, whether to select the first terminal device to participate in the target service.

According to a twelfth aspect, an embodiment of this application provides a communication method. The method includes the following steps.

An application function network element sends a first request to a first network element, where the first request includes an identifier of a first terminal device, and the first request is used to request willingness information of the first terminal device. The first network element receives the first request from the application function network element. The first network element determines a willingness configuration parameter of the first terminal device based on the identifier of the first terminal device. The first network element determines the willingness information of the first terminal device based on the willingness configuration parameter of the first terminal device, where the willingness configuration parameter of the first terminal device represents willingness of the first terminal device to participate in a target service, and the willingness information of the first terminal device indicates whether the first terminal device is willing to participate in the target service. The first network element sends a first response to the application function network element, where the first response includes the willingness information of the first terminal device. The application function network element receives the first response from the application function network element. The application function network element determines, based on the willingness information of the first terminal device, whether to select the first terminal device to participate in the target service.

According to a thirteenth aspect, an embodiment of this application provides a communication system. The system includes:
an application function network element, configured to send a first request to a first network element, where the first request includes an identifier of a first terminal device, and the first request is used to request willingness information of the first terminal device; and
the first network element, configured to receive the first request from the application function network element; determine a willingness configuration parameter of the first terminal device based on the identifier of the first terminal device; determine the willingness information of the first terminal device based on the willingness configuration parameter of the first terminal device, where the willingness configuration parameter of the first terminal device represents willingness of the first terminal device to participate in a target service, and the willingness information of the first terminal device indicates whether the first terminal device is willing to participate in the target service; and send a first response to the application function network element, where the first response includes the willingness information of the first terminal device, where
the application function network element is further configured to receive the first response from the application function network element; and determine, based on the willingness information of the first terminal device, whether to select the first terminal device to participate in the target service.

According to a fourteenth aspect, an embodiment of this application provides a communication method. The method includes the following steps.

An application function network element sends a second request to a second network element, where the second request includes an identifier of a first terminal device, and the second request is used to request a willingness configuration parameter of the first terminal device. After receiving the second request from the application function network element, the second network element sends a third request to a first network element, where the third request includes the identifier of the first terminal device, and the third request is used to request the willingness configuration parameter of the first terminal device. The first network element receives the third request from the second network element, and determines the willingness configuration parameter of the first terminal device based on the identifier of the first terminal device, where the willingness configuration parameter of the first terminal device represents willingness of the first terminal device to participate in a target service. The first network element sends a third response to the second network element, where the third response includes the willingness configuration parameter of the first terminal device. The second network element receives the third response from the first terminal device, and sends a second response to the application function network element, where the second response includes the willingness configuration parameter of the first terminal device. The application function network element receives the second response from the second network element, determines willingness information of the first terminal device based on the willingness configuration parameter, and determines, based on the willingness information of the first terminal device, whether to select the first terminal device to participate in the target service.

According to a fifteenth aspect, an embodiment of this application provides a communication system. The system includes:
an application function network element, configured to send a second request to a second network element, where the second request includes an identifier of a first terminal device, and the second request is used to request a willingness configuration parameter of the first terminal device;
the second network element, configured to send, after receiving the second request from the application function network element, a third request to a first network element, where the third request includes the identifier of the first terminal device, and the third request is used to request the willingness configuration parameter of the first terminal device; and
the first network element, configured to receive the third request from the second network element, and determine the willingness configuration parameter of the first terminal device based on the identifier of the first terminal device, where the willingness configuration parameter of the first terminal device represents willingness of the first terminal device to participate in a target service; and send a third response to the second network element, where the third response includes the willingness configuration parameter of the first terminal device, where
the second network element is further configured to receive the third response from the first terminal device, and send a second response to the application function network element, where the second response includes the willingness configuration parameter of the first terminal device; and
the application function network element is further configured to receive the second response from the second network element, determine willingness information of the first terminal device based on the willingness configuration parameter, and determine, based on the willingness information of the first terminal device, whether to select the first terminal device to participate in the target service.

According to a sixteenth aspect, an embodiment of this application provides a communication method. The method includes the following steps.

An application function network element sends a second request to a first network element, where the second request includes an identifier of a first terminal device, and the second request is used to request a willingness configuration parameter of the first terminal device. The first network element receives the second request from the application function network element. The first network element determines the willingness configuration parameter of the first terminal device based on the identifier of the first terminal device, where the willingness configuration parameter of the first terminal device represents willingness of the first terminal device to participate in a target service. The first network element sends a second response to the application function network element, where the second response includes the willingness configuration parameter of the first terminal device. The application function network element receives the second response from the first network element, determines willingness information of the first terminal device based on the willingness configuration parameter, and determines, based on the willingness information of the first terminal device, whether to select the first terminal device to participate in the target service.

According to a seventeenth aspect, an embodiment of this application provides a communication system. The system includes:
an application function network element, configured to send a second request to a first network element, where the second request includes an identifier of a first terminal device, and the second request is used to request a willingness configuration parameter of the first terminal device; and
the first network element, configured to receive the second request from the application function network element; determine the willingness configuration parameter of the first terminal device based on the identifier of the first terminal device, where the willingness configuration parameter of the first terminal device represents willingness of the first terminal device to participate in a target service; and send a second response to the application function network element, where the second response includes the willingness configuration parameter of the first terminal device, where
the application function network element is further configured to receive the second response from the first network element, determine willingness information of the first terminal device based on the willingness configuration parameter, and determine, based on the willingness information of the first terminal device, whether to select the first terminal device to participate in the target service.

According to an eighteenth aspect, an embodiment of this application provides a communication method. The method includes the following steps.

An application function network element sends a first request to a second network element, where the first request includes an identifier of a first terminal device, and the first request is used to request willingness information of the first terminal device. After receiving the first request from the application function network element, the second network element sends a fifth request to a first network element, where the fifth request includes the identifier of the first terminal device, and the fifth request is used to request a willingness configuration parameter of the first terminal device. The first network element receives the fifth request from the second network element, and determines the willingness configuration parameter of the first terminal device based on the identifier of the first terminal device. The first network element sends a fifth response to the second network element, where the fifth response includes the willingness configuration parameter of the first terminal device, and the willingness configuration parameter of the first terminal device represents willingness of the first terminal device to participate in a target service. After receiving the fifth response from the first network element, the second network element determines the willingness information of the first terminal device based on the willingness configuration parameter of the first terminal device, where the willingness information of the first terminal device indicates whether the first terminal device is willing to participate in the target service. The second network element sends a first response to the application function network element, where the first response includes the willingness information of the first terminal device. The application function network element receives the first response from the second network element. The application function network element determines, based on the willingness information of the first terminal device, whether to select the first terminal device to participate in the target service.

According to a nineteenth aspect, an embodiment of this application provides a communication system. The system includes:
an application function network element, configured to send a first request to a second network element, where the first request includes an identifier of a first terminal device, and the first request is used to request willingness information of the first terminal device;
the second network element, configured to send, after receiving the first request from the application function network element, a fifth request to a first network element, where the fifth request includes the identifier of the first terminal device, and the fifth request is used to request a willingness configuration parameter of the first terminal device; and
the first network element, configured to receive the fifth request from the second network element; determine the willingness configuration parameter of the first terminal device based on the identifier of the first terminal device, where the willingness configuration parameter of the first terminal device represents willingness of the first terminal device to participate in a target service; and send a fifth response to the second network element, where the fifth response includes the willingness configuration parameter of the first terminal device, where
the second network element is further configured to determine, after receiving the fifth response from the first network element, the willingness information of the first terminal device based on the willingness configuration parameter of the first terminal device, where the willingness information of the first terminal device indicates whether the first terminal device is willing to participate in the target service; and send a first response to the application function network element, where the first response includes the willingness information of the first terminal device; and
the application function network element is further configured to receive the first response from the second network element; and determine, based on the willingness information of the first terminal device, whether to select the first terminal device to participate in the target service.

According to a twentieth aspect, an embodiment of this application provides a communication apparatus, including units configured to perform the steps in the method provided in any one of the foregoing aspects. Optionally, the communication apparatus includes a communication unit and a processing unit, where the communication unit is configured to receive and send data, and the processing unit is configured to perform the method provided in any one of the foregoing aspects. For example, the communication apparatus may be used in the first device, the first network element, the second network element, or the third network element above.

According to a twenty-first aspect, an embodiment of this application provides a communication device, including a processor, a memory, and a processor, where the communication module is configured to receive and send data; the memory is configured to store program instructions and data; and the processor is configured to read the program instructions and the data in the memory, to implement the method provided in any one of the foregoing aspects. For example, the communication device may be the first device, the first network element, the second network element, or the third network element above.

According to a twenty-second aspect, an embodiment of this application provides a communication device, including at least one processing element and at least one storage element. The at least one storage element is configured to store a program and data, and the at least one processing element is configured to perform the method provided in any one of the foregoing aspects of this application. For example, the communication device may be the first device, the first network element, the second network element, or the third network element above.

According to a twenty-third aspect, an embodiment of this application further provides a computer program product, where the computer program product includes a computer program; and when the computer program is run on a computer, the computer is enabled to perform the method provided in any one of the foregoing aspects. Optionally, the computer may be the first device, the first network element, the second network element, or the third network element above.

According to a twenty-fourth aspect, an embodiment of this application further provides a computer-readable storage medium. The computer-readable storage medium stores a computer program; and when the computer program is executed by a computer, the computer is enabled to perform the method provided in any one of the foregoing aspects. Optionally, the computer may be the first device, the first network element, the second network element, or the third network element above.

According to a twenty-fifth aspect, an embodiment of this application further provides a chip. The chip is configured to read a computer program stored in a memory, to perform the method provided in any one of the foregoing aspects. Optionally, the chip may include a processor and a memory. The processor is coupled to the memory, and configured to read the computer program stored in the memory, to implement the method provided in any one of the foregoing aspects.

According to a twenty-sixth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1A is a diagram of data distribution of horizontal federated learning according to an embodiment of this application;
FIG. 1B is a diagram of a horizontal federated learning model training process according to an embodiment of this application;
FIG. 2A is a diagram of a structure of a mobile communication system according to an embodiment of this application;
FIG. 2B is a diagram of a structure of another mobile communication system according to an embodiment of this application;
FIG. 3 is a diagram of obtaining network data of a UE by an FL AF according to an embodiment of this application;
FIG. 4 is a flowchart of determining an FL member by an FL AF according to an embodiment of this application;
FIG. 5 is a flowchart of determining an FL member by an FL AF according to an embodiment of this application;
FIG. 6 is a flowchart of a communication method according to an embodiment of this application;
FIG. 7 is a flowchart of obtaining willingness information of a first terminal device by an application function network element according to an embodiment of this application;
FIG. 8A to FIG. 8C are flowcharts of a communication method according to an embodiment of this application;
FIG. 9 is a flowchart of a communication method embodiment according to an embodiment of this application;
FIG. 10 is a flowchart of another communication method embodiment according to an embodiment of this application;
FIG. 11 is a flowchart of still another communication method embodiment according to an embodiment of this application;
FIG. 12 is a flowchart of still yet another communication method embodiment according to an embodiment of this application;
FIG. 13 is a diagram of a structure of a communication apparatus according to an embodiment of this application; and
FIG. 14 is a diagram of a structure of a communication device according to an embodiment of this application.

### DESCRIPTION OF EMBODIMENTS

This application provides a communication method and an apparatus, to determine, based on willingness information of a user, whether to select the user to participate in a target service, to improve user experience. The method and the apparatus are based on a same technical concept. Because problem-resolving principles of the method and the apparatus are similar, mutual reference may be made to implementations of the apparatus and the method, and repeated details are not described again.

Some terms in this application are described below, to facilitate understanding of a person skilled in the art.
(1) A network element is a basic element of a communication network/communication system. Because the network element has a specific network function in a network, the network element is also referred to as a network function (network function, NF) network element, and is referred to as an NF for short. A specific representation form of the network element is not limited in this application. Optionally, the network element may be a network device, a network function entity, a network element unit, a network module, or the like. This is not limited in this application.
(2) A base station is a device that connects a terminal device to a wireless network in a communication system. As a node in a radio access network, the base station may also be referred to as a network device, or may be referred to as a radio access network (radio access network, RAN) node (or device) or an access network (access network, AN) node (or device), or may be referred to as an access point (access point, AP).

Currently, some examples of the base station include: a next-generation NodeB (generation NodeB, gNB), a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, a base station may include a central unit (central unit, CU) node and a distributed unit (distributed unit, DU) node. In this structure, protocol layers of the base station are split. Functions of some protocol layers are centrally controlled by the CU, functions of some or all of remaining protocol layers are distributed in the DU, and the CU centrally controls the DU.

(3) A terminal device is a device that provides voice and/or data connectivity for a user. The terminal device may also be referred to as a user equipment (user equipment, UE), a mobile station (mobile station, MS), a mobile terminal (mobile terminal, MT), a subscriber unit, a subscriber station, a mobile station, a remote station, a remote terminal device, a mobile terminal device, a user terminal device, a wireless communication device, a user agent, a user apparatus, or the like.

For example, the terminal device may be a handheld device, a vehicle-mounted device, a road side unit, or the like that has a wireless communication function. Currently, some examples of the terminal device include: a mobile phone (mobile phone), a cellular phone, a cordless phone, a session initiation protocol (session initiation protocol, SIP) phone, a wireless local loop (wireless local loop, WLL) station, a computing device, a processing device connected to a wireless modem, a tablet computer, a notebook computer, a palmtop computer, a mobile internet device (mobile internet device, MID), a smart sales terminal (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electricity meter, and a smart gas meter), a vehicle-mounted electronic control unit (electronic control unit, ECU), a vehicle-mounted computer, a vehicle-mounted cruise system, a remote information processor (telematics box, T-BOX), a terminal device in a future network, and the like.

(4) A service that needs participation of a terminal device (namely, a user) is a service that needs to be implemented by a network operator, an application service provider, or the like by acquiring user data or by completing some tasks by a user to achieve some purposes. For example, the service may include but is not limited to: federated learning model training, user questionnaire survey, user experience report, service experience registration, advertisement promotion survey, service evaluation, and the like.

The following uses only federated learning model training as an example for description.

Federated learning is a machine learning framework that can effectively help a plurality of organizations use data and perform machine learning modeling while meeting requirements of user privacy protection, data security, and government regulations. The federated learning, as a distributed machine learning framework, can effectively resolve a problem of data silos, and enable participants to perform joint modeling without sharing data, so that the data silos are technically broken and artificial intelligence (artificial intelligence) AI collaboration is implemented. Based on different characteristics of data sources of the participants, the federated learning may be divided into three types: horizontal federated learning, vertical federated learning, and federated transfer learning. The following uses the horizontal federated learning as an example to briefly describe a principle of the federated learning]

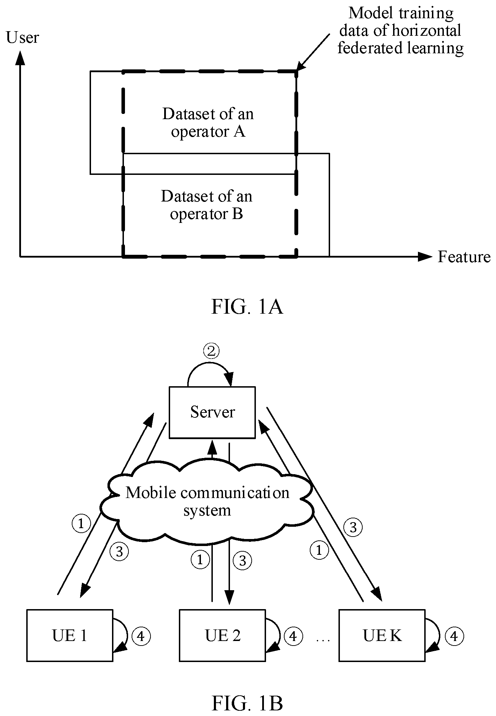

As shown in FIG. 1A, a user feature coincidence degree between datasets of the horizontal federated learning is high, but a user coincidence degree is low. For example, a dataset of an operator A includes data of users (a user 1, a user 2, a user 3, and a user 4), where data of each of the users includes features (a feature 1, a feature 2, a feature 3, a feature 4, and a feature 5); and a dataset of an operator B includes data of users (the user 4, a user 5, a user 6, a user 7, and a user 8), where data of each of the users includes features (the feature 2, the feature 3, the feature 4, the feature 5, and a feature 6). It can be learned that a user intersection set between the datasets of the operators A and B is small, but most user features between the datasets are the same. Therefore, the operators A and B may select same features (namely, the feature 2, the feature 3, the feature 4, and the feature 5) from the respective datasets to perform horizontal federated learning model training, as shown by data in a dashed box in FIG. 1A.

For example, FIG. 1B shows a horizontal federated learning model training process in which transmission of an intermediate result is performed through a mobile communication system. In the horizontal federated learning model training process, each participant (a UE 1, a UE 2, ..., and a UE K) first needs to download a latest model from a server (server) through the mobile communication system, and then perform iteration of the model training process. As shown in FIG. 1B, each iteration process generally includes the following steps:
① Each participant inputs local data into a horizontal federated learning model to calculate a model gradient, and then encrypts the gradient and uploads the encrypted gradient to the server through the mobile communication system.
② The server performs gradient aggregation (for example, averaging gradients fed back by all the UEs) and updates a model parameter.
③ The server distributes an updated model gradient to each participant through the mobile communication system.
④ All the participants update the local horizontal federated learning model.

During actual application (for example, in a massive internet of things (massive internet of things, mIoT) scenario), a quantity of participants in model training may be very large. However, due to limited network bandwidth resources, when a total quantity of participants in horizontal federated learning model training is large, only some UEs need to be selected in each round to participate in the model training. Because storage, computing, and communication capabilities of different UEs may differ greatly, a UE selection result directly affects model training efficiency. When storage, computing, and communication capabilities of selected UEs participating in a specific round of model training are approximately the same, a waiting time length of the server can be greatly reduced, and model training efficiency can be improved.

(5) Identifier of a terminal device. Embodiments of this application relate to two types of identifiers of a terminal device. A first type of identifier identifies the terminal device in an external network of a mobile communication system, and a second type of identifier identifies the terminal device in the mobile communication system. For ease of distinguishing and description, in embodiments of this application, the first type of identifier is briefly referred to as a first identifier (an external identifier), and the second type of identifier is briefly referred to as a second identifier (an internal identifier).

For example, the first identifier of the terminal device may be a generic public subscription identifier (generic public subscription identifier, GPSI), a mobile subscriber international ISDN number (mobile subscriber international ISDN number, MSISDN), or the like of the terminal device. The second identifier of the terminal device may be a subscription permanent identifier (subscription permanent identifier, SUPI), a subscription concealed identifier (subscription concealed identifier, SUCI), an international mobile subscriber identity (international mobile subscriber identity, IMSI), or the like of the terminal device.

(6) Network data of a terminal device is data that is about the terminal device and that is maintained by each network element in a communication network/system.

For example, in a mobile communication system, different network elements may maintain different network data of the terminal device. Optionally, in the mobile communication system, a unified data management (unified data management, UDM) network element (UDM for short below), a session management function (session management function, SMF) network element (SMF for short below), a user plane function (user plane function, UPF) network element (UPF for short below), an operations, administration, and maintenance (operations, administration, and maintenance, OAM) network element (OAM for short below), an access and mobility management function (access and mobility management function, AMF) network element (AMF for short below), a network data analytics function (network data analytics function, NWDAF) network element (NWDAF for short below), and the like can all maintain the network data of the terminal device.

For example, the UDM may maintain user consent (user consent) information of the terminal device. The user consent information is consent information indicating whether the terminal device allows the mobile communication system to open the network data of the terminal device to an AF.

For another example, the SMF or the UPF may maintain traffic information of the terminal device. The traffic information of the terminal device may include information such as a throughput, a delay, or a packet loss rate of the terminal device in a specific time period.

For another example, the OAM may maintain air interface condition information of the terminal device. The air interface condition information of the terminal device may include a radio channel condition of the terminal device, radio resource utilization of the terminal device, and the like.

For another example, the AMF may maintain mobility information of the terminal device. The mobility information of the terminal device may include a location of the terminal device (UE Location), reachability of the terminal device (UE Reachability), a connection management (connection management, CM) state (CM State, for example, a connected state or an idle state) of the terminal device, and the like.

For another example, the NWDAF may maintain a network data analytics result of the terminal device. The network data analytics result of the terminal device may include a mobility analytics result of the terminal device (UE mobility analytics), an abnormal behavior analytics result of the terminal device (UE abnormal behavior analytics), and the like.
(7) Application layer data of a terminal device is statistics data generated in a process in which the terminal device communicates with a server through an application (application, APP) layer to implement a network service. Optionally, the terminal device, the server, or an application function (application function, AF) network element (AF for short) corresponding to the server may maintain the application layer data of the UE. For example, the application layer data of the terminal device may include but is not limited to a data volume of the terminal device, data distribution characteristic information of the terminal device, and the like.
(8) Willingness information of a terminal device indicates whether the terminal device is willing to participate in a service. The willingness information of the terminal device is generally configured by a user who uses the terminal device.

A willingness valid rule of the terminal device represents a condition under which the willingness information of the terminal device is valid. For example, the willingness valid rule of the terminal device may include a willingness valid time period, a willingness valid area, and the like. For example, when willingness information of a UE 1 indicates that the UE 1 is willing to participate in a service, and a willingness valid rule of the UE 1 includes: a time period 1 and an area 1, it indicates that the UE 1 is willing to participate in the service in the time period 1 and the area 1. When willingness information of a UE 2 indicates that the UE 2 is unwilling to participate in a service, and a willingness valid rule of the UE 1 includes a time period 2 and an area 2, it indicates that the UE 2 is unwilling to participate in the service in the time period 2 and the area 2. For another example, when the willingness information of the UE 2 indicates that the UE 2 is unwilling to participate in the service, the willingness valid rule of the UE 2 by default includes all time periods and all areas, that is, the UE 2 is unwilling to participate in the service in all the time periods and all the areas.

(9) A willingness configuration parameter of a terminal device represents willingness of the terminal device to participate in a service.

Based on the descriptions in (8), the willingness configuration parameter of the terminal device may be maintained in, but is not limited to, the following implementations.

In an implementation, the willingness configuration parameter of the terminal device may include willingness information of the terminal device. Optionally, the willingness configuration parameter of the terminal device may further include a willingness valid rule of the terminal device.

In another implementation, the willingness configuration parameter of the terminal device may include a first configuration parameter. The first configuration parameter indicates the willingness information of the terminal device. Optionally, the willingness configuration parameter of the terminal device may further include a second configuration parameter, where the second configuration parameter indicates the willingness valid rule of the terminal device.
(10) An execution rule of a service represents a condition needed for performing the service, for example, a service execution time period and a service execution area.
(11) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be noted that "a plurality of" in this application means two or more than two. "At least one" means one or more.

In addition, it should be understood that in descriptions of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

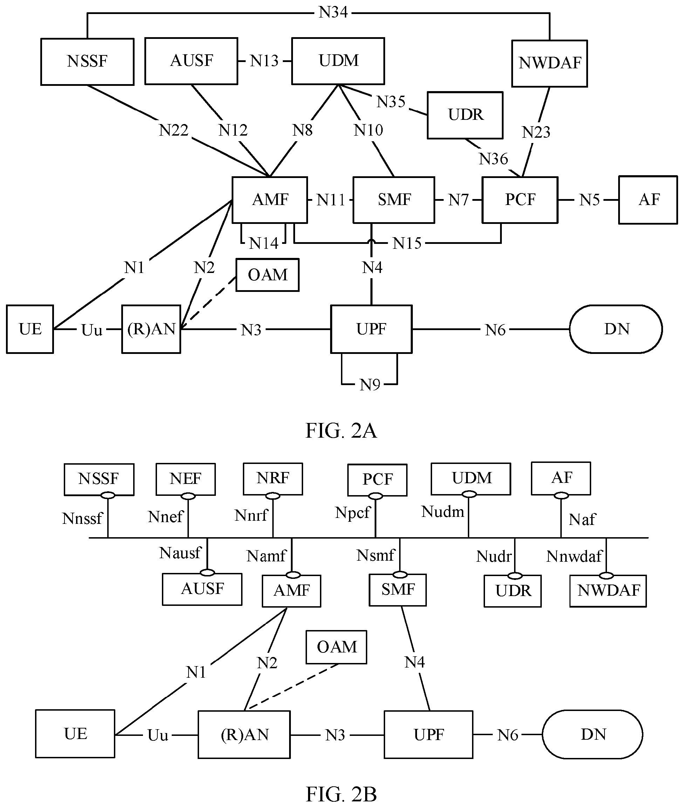

The method provided in embodiments of this application may be applied to various communication systems. In this application, a mobile communication system is used as an example for description. FIG. 2A and FIG. 2B each provide a diagram of an architecture of a mobile communication system. FIG. 2A shows a system architecture based on a reference point, and FIG. 2B shows a system architecture based on a service-oriented interface. The following describes in detail network elements and entities in the mobile communication system with reference to the accompanying drawings.

A terminal device, a UE for short, is a user-side entity that can receive and transmit radio signals, and needs to access a DN through the mobile communication system, to implement a service of the UE. The UE may be various devices that provide voice and/or data connectivity for the user. This is not limited in this application.

The DN may also be referred to as a packet data network (packet data network, PDN), and is a network located outside the mobile communication system. A server (server) that implements a plurality of services may be deployed on the DN, and may provide a service like data and/or voice for the UE. The mobile communication system may access at least one DN, and a same DN may also be accessed by at least one mobile communication system. For example, the DN may be the internet (Internet), an IP multimedia service (IP Multimedia Service, IMS) network, a data network dedicated to some applications, an Ethernet, an IP local network, or the like. This is not limited in this application.

The mobile communication system is deployed and maintained by an operator, and provides an access service and an end-to-end connection service for the UE, and may also be referred to as a mobile communication network. The UE may access the DN through the mobile communication system, to implement a specific service. The mobile communication system may further include two parts: a (radio) access network ((radio) access network, (R)AN) and a core network (core network, CN). When the UE requests to access the DN, the mobile communication system may establish a session (for example, a PDU session) of the UE between the UE and the DN, so that the UE and the DN can communicate with each other.

The (R)AN is mainly responsible for a radio access function of the UE, and the function of the (R)AN may be specifically implemented by a base station. The base station is a network-side entity that can receive and transmit radio signals, is responsible for providing a radio access-related service for a UE in coverage of the base station, and implements a physical layer function, resource scheduling and radio resource management, QoS management, radio access control, user plane data forwarding, and a mobility management function. The base station and the UE implement air interface transmission through a Uu interface.

The CN is responsible for connecting the UE to different data networks based on a call request or a service request sent by the UE through an access network, and performing services such as charging, mobility management, and session management. Based on specific logical function division, the CN may be divided into a control plane (control plane, CP) and a user plane (user plane, UP). A network element responsible for a control plane function in the CN may be collectively referred to as a control plane network element, and a network element responsible for a user plane function may be collectively referred to as a user plane network element. The following describes in detail functions of main network elements in the core network.

The user plane network element, namely, a user plane function (user plane function, UPF) network element, is referred to as a UPF for short, and is mainly responsible for forwarding and receiving user plane data of the UE. The user plane network element may receive the user plane data from the DN, and transmit the user plane data to the UE through the base station. The user plane network element may further receive the user plane data from the UE through the base station, and forward the user plane data to the DN. A transmission resource scheduling function that is in the user plane network element and that provides a service for the UE is managed and controlled by the control plane network element.

The control plane network element includes an access and mobility management function (access and mobility management function, AMF) network element, a session management function (session management function, SMF) network element, a policy control function (policy control function, PCF) network element, an authentication server function (authentication server function, AUSF) network element, a network exposure function (network exposure function, NEF) network element, a charging function (charging function, CHF) network element, an application function (application function, AF) network element, an OAM network element, or the like. The control plane network element may further include a data storage network element, configured to store user data. Optionally, the data storage network element may include but is not limited to a network element having a data storage function like a unified data repository (unified data repository, UDR) network element or a unified data management (unified data management, UDM) network element.

The following briefly describes each control plane network element.

The AMF network element may be referred to as an AMF for short, and is mainly responsible for mobility management, access authentication/authorization, and signaling processing of a user in the mobile communication system. For example, functions of the AMF may include access control, UE location update, UE registration and deregistration, attachment and detachment, SMF selection, NAS signaling security termination, UE mobility management, N1/N2 interface signaling transmission, access authentication and authorization, and the like. In addition, the AMF is further responsible for transferring a user policy between the UE and the PCF.

The SMF network element may be referred to as an SMF for short, and is mainly responsible for session management, for example, session establishment, modification, and release, in the mobile communication system. Specifically, functions of the SMF include UPF selection, UPF redirection, internet protocol (internet protocol, IP) address allocation, bearer establishment, modification and release, QoS control, and the like.

The PCF network element may be referred to as a PCF for short, and is mainly responsible for providing a unified policy framework to control network behavior, providing a policy rule for another control plane network element, and obtaining policy-related user subscription information.

The AUSF network element may be referred to as an AUSF for short, and is mainly responsible for providing an authentication function, and supporting authentication of 3rd generation partnership project (3rd generation partnership project, 3GPP) access and non-3GPP (Non-3GPP) access.

The NEF network element may be referred to as a NEF for short, mainly supports secure interaction between the mobile communication system and a third-party application, and can securely open a network capability and an event to the third party, to enhance or improve quality of service of the application. The mobile communication system may also securely obtain related data from the third party through the NEF to enhance intelligent decision-making of the network.

The UDR network element may be referred to as a UDR for short, and is mainly responsible for storing data such as subscription data, policy data, and application data of the UE.

The UDM network element may be referred to as a UDM for short, and is mainly responsible for functions such as storing and managing the subscription data of the UE, performing user access authorization, generating an authentication credential, and processing a subscriber identifier (for example, storing and managing a subscriber permanent identifier).

The AF network element may be referred to as an AF for short, mainly transmits a requirement of an application side for a network side, and supports interaction with another network element in the core network to provide a service, for example, affecting a data routing decision, a policy control function, or providing some third-party services for the network side. The AF network element may be a third-party functional entity or an application server deployed by the operator.

The NSSF network element may be referred to as an NSSF for short, and is mainly responsible for selecting a network slice.

The NWDAF network element may be referred to as an NWDAF for short, serves as a data perception analysis network element, and can obtain network data maintained in each network element in the mobile communication system, perform perception analysis based on the network data, and finally participate in optimization of various network management parameters, network planning, construction, operations and maintenance, optimization, and operation based on an analytics result, so that the network is easier to maintain and control, network resource usage efficiency is improved, and user service experience is improved.

The OAM network element may be referred to as an OAM for short, and performs operation control, management, and maintenance on a network element or an entity in the mobile communication system. Specific functions of the OAM may include: performing performance monitoring and fault detection on a network element or an entity, performing work scheduling, configuring a work parameter, and the like. Optionally, in addition to communicating with the (R)AN, the OAM may further communicate and interact with network elements such as the NWDAF and the UDM in the CN.

It should be understood that the foregoing network elements in the CN may be network elements implemented on special-purpose hardware, may be software instances running on special-purpose hardware, or may be instances of virtualization functions on a virtualization platform (for example, a cloud platform). In addition, a distribution form of the network elements in the communication system is not limited in embodiments of this application. Optionally, the foregoing network elements may be separately deployed in different physical devices, or a plurality of network elements are integrated into a same physical device.

In addition, FIG. 2A further shows an interaction relationship between network function entities in the mobile communication system and corresponding reference points/interfaces. FIG. 2B further shows service-oriented interfaces used between some network function entities in the mobile communication system.

It should be noted that the mobile communication system shown in FIG. 2A or FIG. 2B does not constitute a limitation on the mobile communication system to which embodiments of this application are applicable. Therefore, the communication method provided in embodiments of this application is further applicable to communication systems of various standards, for example, a long term evolution (long term evolution, LTE) communication system, a 5th generation (5th Generation, 5G) communication system, a 6th generation (6th Generation, 6G) communication system, and a future communication system. In addition, FIG. 2A or FIG. 2B does not limit a communication scenario of the mobile communication system. In addition to the non-roaming scenarios shown in FIG. 2A and FIG. 2B, this application is further applicable to various roaming scenarios.

Finally, it should be further noted that names of the network elements in the mobile communication system are not limited in embodiments of this application either. For example, in mobile communication systems of different standards, network elements may have other names. For another example, when a plurality of network elements are integrated into a same physical device, the physical device may alternatively have another name.

In the mobile communication system shown in FIG. 2A or FIG. 2B, the Uu interface between the UE and the (R)AN includes a control plane protocol stack and a user plane protocol stack. The user plane protocol stack includes at least the following protocol layers: a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer. The control plane protocol stack includes at least the following protocol layers: a PHY layer, a MAC layer, an RLC layer, a PDCP layer, and a radio resource control (radio resource control, RRC) layer.

In the communication system, a network operator, an application service provider, or the like may have some services that need participation of a user (namely, a terminal device, where a UE is used as an example for description subsequently). For descriptions of this type of service, refer to the foregoing term explanation in (4) above. Details are not described herein again. In this application, an AF that implements the service may determine, by using a plurality of solutions, a user participating in the service.

The following uses an example in which a federated learning model training service is implemented in the mobile communication system shown in FIG. 2A or FIG. 2B for description. In the following descriptions, the federated learning model training service is referred to as an FL service for short, the AF that implements the federated learning model training service is referred to as an FL AF for short, and a terminal device that finally participates in the FL service is referred to as an FL member.

Solution 1: The core network in the mobile communication system opens network data of the UE to the FL AF.

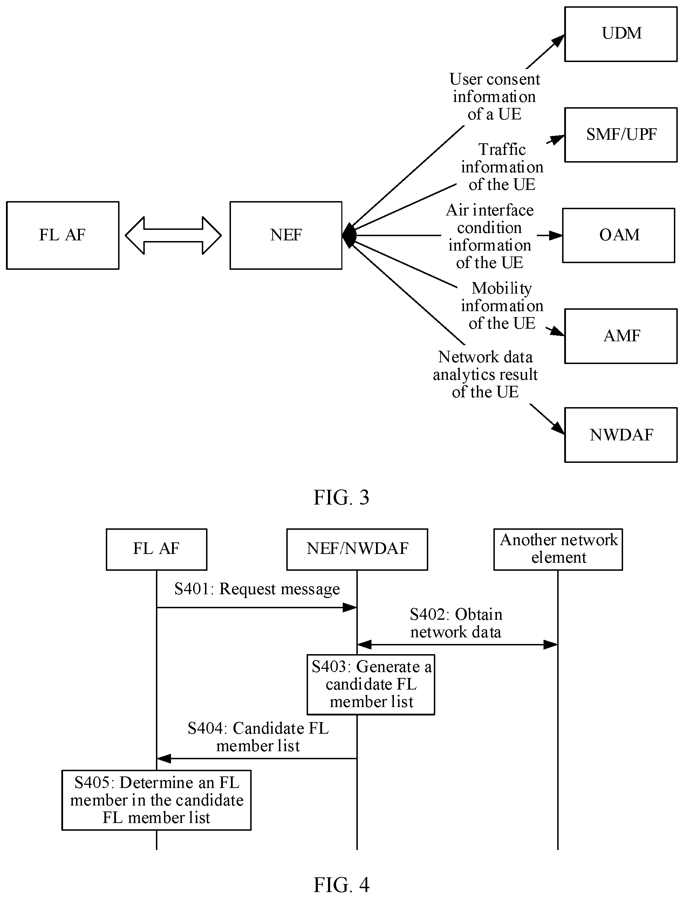

Refer to FIG. 3. The FL AF may obtain the network data of the UE from a network element (for example, the UDM, the SMF, the UPF, the OAM, the AMF, or the NWDAF) in the mobile communication system, to assist the FL AF in selecting the FL member.

Descriptions are provided with reference to the descriptions of the network data of the terminal device in (6) above. For example, the FL AF may obtain user consent (user consent) information of the UE from the UDM. For another example, the FL AF may obtain traffic information of the UE from the SMF and/or the UPF. For another example, the FL AF may obtain air interface condition information of the UE from the OAM. For another example, the FLAF may obtain mobility information of the UE from the AMF. For still another example, the FL AF may obtain a network data analytics result of the UE from the NWDAF.

Optionally, when the FL AF is an AF deployed by a third party, in consideration of security, interaction between the FL AF and a network element in the mobile communication system and interaction between the FL AF and the OAM need to be implemented through the NEF. The NEF may perform verification on legitimacy of a request of the AF. A mapping relationship between the FL AF and network data that is allowed to be obtained, a related inbound restriction (limiting network data that can be requested by the FL AF) or an outbound restriction (limiting network data that can be notified to the AF), and the like may be configured in the NEF.

After obtaining network data of a plurality of UEs from the mobile communication system, the FL AF may select an FL member from the plurality of UEs based on the obtained network data of the plurality of UEs and an FL member selection policy. Optionally, the FL AF may further select the FL member with reference to application layer data of the plurality of UEs.

In an implementation, the FL AF may quantize the network data and the application layer data of each UE, and then calculate a weighted sum of quantized data of each UE, to obtain a network status score of each UE. Finally, the FL AF may select first n UEs with highest network status scores from the plurality of UEs as FL members.

For example, the FL AF obtains application layer data and network data of 100 UEs, and prepares to select 80 UEs from the 100 UEs to participate in model training. The FL AF then quantizes each item of the network data and the application layer data of each UE as follows:
The FLAF may quantize the application layer data of each UE to obtain quantized data of an application layer of each UE, for example, UE 1_app=0.7, UE 2_app=0.5, UE 3_app=0.9, ..., and UE 100_app=0.75.

The FL AF may quantize a CM state of each UE to obtain quantized data of the CM state of each UE, for example, UE 1_CMstate=1, UE 2_CMstate=0, UE 3_CMstate=0, ..., and UE 100_CMstate=1.

The FL AF may quantize a reachable state of each UE to obtain quantized data of the reachable state of each UE, for example, UE 1_reachable=1, UE 2_reachable=1, UE 3_reachable=0, ..., and UE 100_reachable=1.

The FL AF may quantize mobility of each UE to obtain quantized data of the mobility of each UE, for example, UE 1_mobility=0.65, UE 2_mobility=0.7, UE 3_mobility=0.3, ..., and UE 100_mobility=0.95.

The FL AF may quantize a radio channel condition of each UE to obtain quantized data of a channel of each UE, for example, UE 1_radiochannel=0.85, UE 2_radiochannel=0.5, UE 3_radiochannel=0.6, ..., and UE 100_radiochannel=0.7.

The FLAF may quantize radio resource utilization of each UE to obtain quantized data of the resource utilization of each UE, for example, UE 1_radioresource=0.8, UE 2_radioresource=0.4, UE 3_radioresource=0.7, ..., and UE 100_radioresource=0.55.

The FL AF may then set a weight for each parameter based on importance of each parameter, for example, UE_app_weight=0.3, UE_CMstate_weight=0.2, UE_reachable_weight=0.1, UE_mobility_weight=0.2, UE_radiochannel_weight=0.1, and UE_radioresource_weight=0.1.

The FL AF may then calculate a network status score of each UE based on the quantized data of each parameter for each UE and the corresponding weight. A network status score of the UE 1 may be calculated by using the following formula: UE 1_score=0.7*0.3+1*0.2+1*0.1+0.65*0.2+0.85*0.1+0.8*0.1=0.805. Similarly, the FL AF may calculate a weighted score of another UE.

Finally, the FL AF sorts network status scores of all the UEs, and selects 80 UEs with highest network status scores as FL members that participate in model training.

It should be noted that the foregoing descriptions are used as an example, and do not constitute any limitation on the FL member selection policy.

Solution 2: The mobile communication system provides a candidate FL member list for the FL AF to select, as shown in FIG. 4.

S401: The FL AF sends a request message to the NEF/NWDAF, where the request message is used to obtain the candidate FL member list (namely, Candidate UEs).

Optionally, the request message may carry, but is not limited to, at least one of the following FL service related parameters.
(1) Target area: The target area indicates a network (for example, the NEF/NWDAF) to determine the candidate FL member list from UEs located in the target area.
(2) UE group identifier (group ID)/UE list: The UE group identifier or the UE list is a group of initial UEs provided by the FL AF to the NEF/NWDAF, and indicates that the network may determine the candidate FL member list from the group of initial UEs.
(3) Quantity of candidate FL members: The quantity of candidate FL members is a quantity of UEs (namely, Expected number of UE for reporting) in the candidate FL member list that the FL AF expects to obtain.
(4) QoS requirement: The QoS requirement is a QoS requirement of the FL AF for a UE or a UE group participating in the FL service. For example, the FL AF may require that a bit rate of each UE participating in the FL service be not lower than 10 Mbps, or require that a delay variance of all UEs participating in the FL service be not greater than a threshold. When the request message includes the QoS requirement, the UEs in the candidate FL member list generated by the network need to meet the QoS requirement.
(5) Type of network data: This parameter indicates a type of network data that needs to be obtained for the NEF/NWDAF to determine the candidate FL member list.

For example, the type of the network data may include Analytics ID or Event ID. Analytics ID identifies a network data analytics type provided by the NWDAF. For example, Analytics ID="Service Experience" indicates that the NWDAF needs to provide a service experience data analytics result of the UE; and Analytics ID="Network Performance" indicates that the NWDAF needs to provide a network performance analytics result of the UE. Event ID may identify a type of network data provided by another network element other than the NWDAF. For example, Event ID="Connectivity state changes" indicates that the AMF needs to provide CM state (idle state or connected state) change information of the UE; and Event ID="QoS monitoring result" indicates that the UPF needs to provide a QoS monitoring result (for example, a bit rate or a delay) of the UE.

Certainly, the foregoing parameters are used as examples, and do not constitute any limitation on the request message. During actual application, the request message may not carry any parameter, or may further carry another parameter. For example, the request message may further carry a service identifier of the FL service, an execution time period of the FL service, a volume of data whose transmission is needed for performing the FL service, and the like.

It should be further noted that, similar to Solution 1, for security consideration, when the FL AF is an AF deployed by a third party, the FL AF needs to send the request message to the NWDAF through the NEF. The NEF may perform verification on legitimacy of the request message of the FL AF. For details, refer to the related descriptions in Solution 1. Details are not described herein again.

S402: The NEF/NWDAF obtains network data of a plurality of UEs. Optionally, the NEF/NWDAF may obtain the network data of the plurality of UEs locally and/or from another network element.

Optionally, when the request message includes related parameters of the FL service, the NEF/NWDAF may obtain the network data of the plurality of UEs based on the related parameters. For example, when the request message sent by the FL AF includes a type of network data, the NEF/NWDAF may determine, for the type of the network data, a target network element that stores the type, and send a network data request to the target network element, to obtain the network data of the type from the target network element. For another example, when the request message includes a target area or a UE group identifier/UE list, the NEF/NWDAF may obtain network data of a plurality of UEs that are located in the target area or belong to the UE group identifier/UE list.

S403: The NEF/NWDAF determines the candidate FL member list in the plurality of UEs based on the obtained network data of the plurality of UEs and a candidate FL member selection policy.

Optionally, when the request message sent by the FL AF includes a related parameter of the FL service, the NEF/NWDAF may determine the candidate FL member list in the plurality of UEs based on the related parameter, the network data of the plurality of UEs, the candidate FL member selection policy, and the like.

It should be noted that the candidate FL member selection policy is not limited in embodiments of this application, and the policy may be specifically set based on a specific scenario or specific implementation.

For example, the NEF/NWDAF may select, in the plurality of UEs, a plurality of first UEs whose network data meets a requirement of the related parameter; and then determine the candidate FL member list in the plurality of first UEs based on the network data of the plurality of first UEs. For example, the NEF/NWDAF may quantize the network data of the plurality of first UEs with reference to the solution in Solution 1 above, then determine a network status score of each first UE, and select n first UEs with highest network status scores as the candidate FL member list.

S404: The NEF/NWDAF sends the generated candidate FL member list to the FL AF.

Optionally, when the NWDAF generates the candidate FL member list, and the FL AF is an AF deployed by a third party, the NWDAF also needs to send the candidate FL member list to the FL AF through the NEF. The NEF may perform verification on legitimacy of the FL AF.

S405: After obtaining the candidate FL member list, the FL AF may determine final FL members in the candidate FL member list.

Optionally, the FL AF may obtain application layer data of each candidate UE in the candidate FL member list, and then determine the FL members in the candidate FL member list based on the application layer data of each candidate UE.

Solution 3: The mobile communication system provides an FL member list to the FL AF.

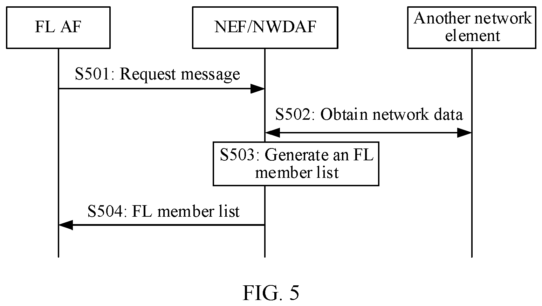

Solution 3 is similar to Solution 2. For a specific process, refer to FIG. 5. For S501 to S504 in Solution 3, refer to S401 to S404 in Solution 2. A difference lies in that in Solution 3, the request message sent by the FL AF to the NEF/NWDAF is used to request the FL member list instead of the candidate FL member list. Correspondingly, the NEF/NWDAF feeds back a final FL member list to the FL AF. After receiving the FL member list, the FL AF may directly perform the FL service for FL members in the FL member list, and does not need to perform S405 as in Solution 2.

It can be learned from the foregoing descriptions of the conventional solution for determining FL members that, currently, a terminal device participating in a service is determined by an AF or a core network, and whether the terminal device is willing to participate in the service is not considered. As a result, a user may perform the service without knowing whether the terminal device is willing to participate in the service, or occupy a local resource of the terminal device to perform the service, causing poor user experience.

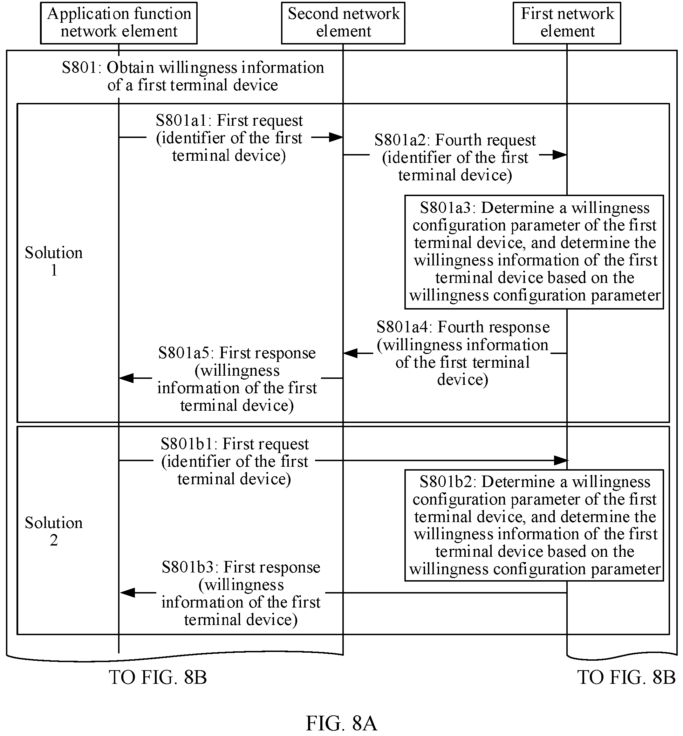

Based on the foregoing problem, an embodiment of this application provides a communication method. An application function network element may determine, based on willingness information of a user, whether to select the user to participate in a target service, to improve user experience. For a procedure of the method provided in this embodiment of this application, refer to FIG. 8A to FIG. 8C. In this embodiment of this application, a first terminal device is used as an example for description. A first network element in this method is a network element, for example, a UDM or a UDR, that can store a willingness configuration parameter of the first terminal device in a communication network/system. A second network element may be a device that supports the application function network element in accessing the first network element in a scenario in which the application function network element cannot directly access the first network element. Optionally, the second network element may be a network exposure function network element (for example, a NEF).

Before the method is described, some messages in this embodiment are first described.

A "first request" is a message that is sent by the application function network element to the first network element or the second network element and that is used to request willingness information of the first terminal device; and a "first response" is a response message of the "first request", and is a message that is sent by the first network element or the second network element to the application function network element and that carries the willingness information of the first terminal device.

A "second request" is a message that is sent by the application function network element to the first network element or the second network element and that is used to request the willingness configuration parameter of the first terminal device; and a "second response" is a response message of the "second request", and is a message that is sent by the first network element or the second network element to the application function network element and that carries the willingness configuration parameter of the first terminal device.

A "third request" is a message that is sent by the second network element to the first network element and that is used to request the willingness configuration parameter of the first terminal device; and a "third response" is a response message of the "third request", and is a message that is sent by the first network element to the second network element and that carries the willingness configuration parameter of the first terminal device.

A "fourth request" is a message that is sent by the second network element to the first network element and that is used to request the willingness information of the first terminal device; and a "fourth response" is a response message of the "fourth request", and is a message that is sent by the first network element to the second network element and that carries the willingness information of the first terminal device.

A "fifth request" is a message that is sent by the second network element to the first network element and that is used to request the willingness configuration parameter of the first terminal device; and a "fifth response" is a response message of the "fifth request", and is a message that is sent by the first network element to the second network element and that carries the willingness configuration parameter of the first terminal device.

A "first message" is a message that is sent by the application function network element to the second network element and that includes willingness information of a third terminal device and an identifier of the third terminal device; a "second message" is a message that is sent by the second network element to the first network element and that includes the willingness information of the third terminal device and the identifier of the third terminal device; and a "third message" is a message that is sent by the application function network element to the second network element and that includes the willingness information of the third terminal device and the identifier of the third terminal device.

For distinguishing and description, other messages in this embodiment of this application may be sorted and named based on an appearance sequence. Details are not described herein again.

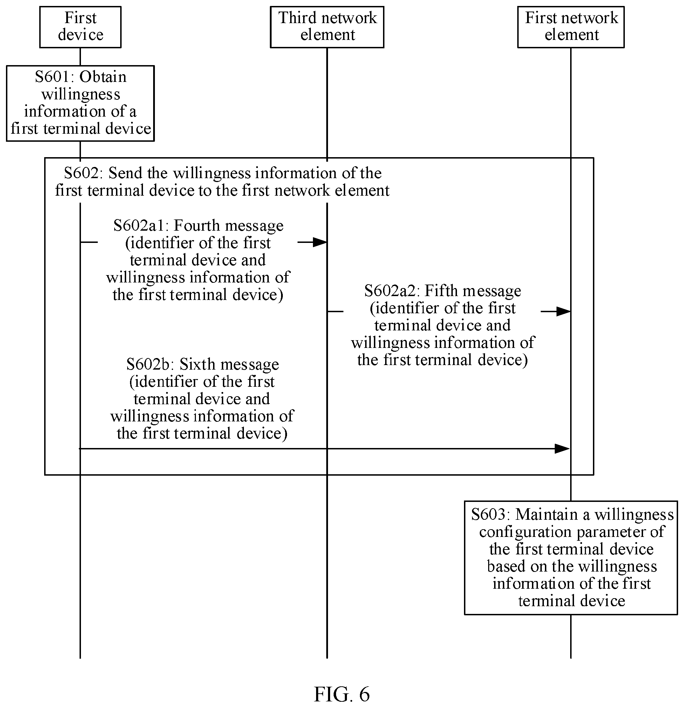

In an implementation, the willingness configuration parameter of the first terminal device that is stored in the first network element may be, but is not limited to being, configured by a first device through a procedure shown in FIG. 6. Through the procedure shown in FIG. 6, the first device may send the willingness information of the first terminal device to a network side, so that the application function network element may obtain the willingness information of the first terminal device, and determine, based on the willingness information of the first terminal device, whether to select the terminal device to participate in a specific service.

Therefore, before the embodiment shown in FIG. 8A to FIG. 8C is described, the following first describes a process in which the first device sends the willingness information of the first terminal device to the first device with reference to a flowchart shown in FIG. 6. A third network element in FIG. 6 may be a device that supports the first device in accessing the communication network/system in a scenario in which the first device cannot directly access the first network element.

S601: The first device obtains the willingness information of the first terminal device. The willingness information of the first terminal device indicates whether the first terminal device is willing to participate in the target service.

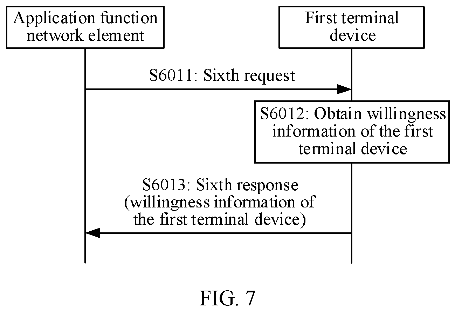

In an implementation, the first device may be an application function network element. Optionally, refer to FIG. 7. The first device may obtain the willingness information of the first terminal device from the first terminal device through the following steps S6011 to S6013.

S6011: The application function network element sends a sixth request to the first terminal device, where the sixth request is used to request the willingness information of the first terminal device.

Optionally, the application function network element may send the sixth request to the first terminal device through an application layer. For example, when an application client is installed in the first terminal device, and the first terminal device starts the application client, the application function network element may send the sixth request to the application client.

S6012: The first terminal device obtains the willingness information of the first terminal device based on the sixth request.

Optionally, in this embodiment of this application, the first terminal device may perform S6012 in, but not limited to, the following manners.

Manner a: The first terminal device may display the sixth request on a display screen, so that a user may configure the willingness information of the first terminal device through the display screen.

Manner b: After receiving the sixth request, the first terminal device may obtain, based on the sixth request, the willingness information that is of the first terminal device and that is preconfigured and stored by the user.

In a design, the sixth request may include at least one of the following: a service identifier of the target service, an execution rule of the target service, or a volume of data whose transmission is for performing the target service. In this way, the first terminal device may provide the foregoing information in the sixth request for the user, so that the user can determine, with reference to the foregoing information, whether the user is willing to participate in the target service; or the first terminal device may determine, with reference to the foregoing information, whether the user is willing to participate in the target service.

S6013: The first terminal device sends a sixth response to the application function network element. The application function network element receives the sixth response from the first terminal device. The sixth response includes the willingness information of the first terminal device.

In another implementation, the first device may be the first terminal device. The first terminal device may obtain the willingness information of the first terminal device in, but not limited to, the following manners.

Manner 1: The first terminal device obtains the willingness information that is of the first terminal device and that is configured by the user.

In this embodiment of this application, when obtaining the willingness information that is of the first terminal device and that is configured by the user, the first terminal device may trigger execution of the method provided in this embodiment of this application, to configure the willingness information of the first terminal device into the communication network/system.

Manner 2: The first terminal device receives the sixth request from the application function network element, and obtains, based on the sixth request, the willingness information that is of the first terminal device and that is configured by the user, where the sixth request is used to request the willingness information of the first terminal device. Optionally, after obtaining the willingness information of the first terminal device, the first terminal device may further send the sixth response to the application function network element. The sixth response includes the willingness information of the first terminal device. For a specific process of Manner 2, refer to S6011 to S6013 in the procedure shown in FIG. 7. Details are not described herein again.

It should be further noted that, when the first device is an application function network element (namely, when the application function network element obtains the willingness information of the first terminal device in Manner 1 above), the application function network element may trigger the obtaining of the willingness information of the first terminal device when determining that the first terminal device is a candidate terminal device participating in the target service. In other words, before S601, the application function network element may determine at least one candidate terminal device participating in the target service, where the at least one candidate terminal device includes the first terminal device. A method and a process for determining, by the application function network element, the at least one candidate terminal device are not limited in this application. For example, the application function network element may determine the at least one candidate terminal device based on network data and application layer data of a plurality of terminal devices, current physical locations of the terminal devices, and the like with reference to the manner recorded in the conventional solution 1.

S602: The first device sends the willingness information of the first terminal device to the first network element. The first network element receives the willingness information of the first terminal device.

In this embodiment of this application, the first device may perform S602 by using, but not limited to, the following two implementations.

In a first implementation, the first device may send the willingness information of the first terminal device to the first network element through the third network element. The first network element receives the willingness information of the first terminal device forwarded by the third network element. As shown in FIG. 6, this implementation includes steps S602a1 and S602a2. For example, in a scenario in which the communication network/system does not support direct interaction between the first device and the first network element, the first device may perform S602 by using the first implementation.

S602a1: The first device sends a fourth message to the third network element, so that the third network element sends a fifth message to the first network element based on the fourth message. The third network element receives the fourth message from the first device. The fourth message and the fifth message include the willingness information of the first terminal device and the identifier of the first terminal device.

S602a2: The third network element sends the fifth message to the first network element. The fifth message includes the willingness information of the first terminal device and the identifier of the first terminal device. The first network element receives the fifth message from the third network element. The fifth message is used to request to maintain the willingness configuration parameter of the first terminal device based on the willingness information of the first terminal device.

Optionally, in this implementation, when the first device is the first terminal device, the third network element is an access and mobility management network element (for example, an AMF). When the first device is an application function network element, the third network element may be a network exposure function network element (for example, a NEF).

In a second implementation, the first device directly interacts with the first network element, and sends the willingness information of the first terminal device to the first network element. The first network element receives the willingness information of the first terminal device from the first device. As shown in FIG. 6, this implementation includes step S602b.

S602b: The first device sends a sixth message to the first network element, where the sixth message includes the willingness information of the first terminal device and the identifier of the first terminal device. The first network element receives the sixth message from the first device.

Optionally, in this embodiment of this application, the first device may further send willingness association information of the first terminal device to the first network element, so that the first network element may maintain the willingness configuration parameter of the first terminal device with reference to the willingness association information and the willingness information of the first terminal device. The willingness association information includes at least one of the following: the service identifier of the target service or a willingness valid rule of the first terminal device. Optionally, the willingness valid rule of the first terminal device may include: a willingness valid time period or a willingness valid area.

In this embodiment of this application, the first device may send the willingness association information in a manner similar to the foregoing two implementations. For example, the first device may send the willingness association information simultaneously when sending the willingness information of the first terminal device. For example, when the first device performs S602 by using the first implementation, the fourth message and the fifth message may further include the willingness association information. For another example, when the first device performs S602 by using the second implementation, the sixth message further includes the willingness association information.

It should be noted that the first device may obtain the willingness valid rule of the first terminal device in a plurality of manners. For example, the first device may obtain the willingness valid rule simultaneously when obtaining the willingness information of the first terminal device in S601. In other words, similar to the willingness information of the first terminal device, the willingness valid rule may be preconfigured by the user and stored in the first terminal device, or configured by the user into the first terminal device based on the first request.

S603: The first network element maintains the willingness configuration parameter of the first terminal device based on the willingness information of the first terminal device. The willingness configuration parameter of the first terminal device represents willingness of the first terminal device to participate in the target service.

It should be further noted that, if the first network element further receives the willingness association information of the first terminal device in S602, when performing S603, the first network element may maintain the willingness configuration parameter of the first terminal device based on the willingness information of the first terminal device and the willingness association information.

Optionally, the first network element may maintain the willingness configuration parameter of the first terminal device through the following steps:
when the first network element does not store the willingness configuration parameter of the first terminal device, the first network element creates the willingness configuration parameter of the first terminal device based on the willingness information of the first terminal device and the identifier of the first terminal device; or
when the first network element stores the willingness configuration parameter of the first terminal device, the first network element may update the willingness configuration parameter of the first terminal device based on the willingness information of the first terminal device.

In a possible design, when the willingness information of the first terminal device indicates that the first terminal device is unwilling to participate in the target service (or the willingness information of the first terminal device and the willingness valid rule indicate that the first terminal device is unwilling to participate in the target service in any time period/any area), the first network element may further delete the stored willingness configuration parameter of the first terminal device, or may not create the willingness configuration parameter of the first terminal device.

In another possible design, even if the willingness information of the first terminal device indicates that the first terminal device is unwilling to participate in the target service (or the willingness information of the first terminal device and the willingness valid rule indicate that the first terminal device is unwilling to participate in the target service in any time period/any area), the first network element may still create or update the willingness configuration parameter of the first terminal device based on the willingness information.

Through S603, the first network element may maintain a latest willingness configuration parameter of the first terminal device, so that another network element subsequently queries for the willingness configuration parameter of the first terminal device or the willingness information of the first terminal device.

In a possible design, when performing S602, the first device may further send, to the first network element, maintenance information indicating a maintenance manner. The maintenance manner may be: creating the willingness configuration parameter, updating the willingness configuration parameter, or deleting the willingness configuration parameter.

For example, when the first device sends the willingness information of the first terminal device to the first network element for the first time, the first device may send, to the first network element, the maintenance information that indicates to create the willingness configuration parameter; or when the first device sends the willingness information of the first terminal device to the first network element not for the first time, the first device may send, to the first network element, the maintenance information that indicates to update the willingness configuration parameter.

For another example, when the first device sends the willingness information of the first terminal device to the first network element for the first time, and the willingness information indicates that the first terminal device is willing to participate in the target service, the first device may send, to the first network element, the maintenance information that indicates to create the willingness configuration parameter; when the first device sends adjusted willingness information of the first terminal device to the first network element, the first device may send, to the first network element, the maintenance information that indicates to update the willingness configuration parameter; or when the willingness information of the first terminal device indicates that the first terminal device is unwilling to participate in the target service (or the willingness information of the first terminal device and the willingness valid rule indicate that the first terminal device is unwilling to participate in the target service in any time period/any area), the first device may send, to the first network element, the maintenance information that indicates to delete the willingness configuration parameter.

It should be further noted that the first device may send the maintenance information in a plurality of manners. For example, the first device may include the maintenance information in a message for sending the willingness information of the first terminal device. For another example, the first device may send the willingness information of the first terminal device via messages of different types, where different message types correspond to maintenance information indicating different maintenance manners.

In the foregoing manner, when performing S603, the first network element may maintain the willingness configuration parameter of the first terminal device based on the maintenance manner indicated by the maintenance information.

In conclusion, according to the method provided in the embodiment shown in FIG. 6, the first device may configure the willingness information of the terminal device on the network side. In this way, the network side may determine, with reference to the willingness information of the terminal device, whether to select the terminal device to participate in the specific service, to ensure user experience.

Refer to FIG. 8A to FIG. 8C. The following continues to use a first terminal device as an example to describe a method provided in an embodiment of this application. For descriptions of willingness information or a willingness configuration parameter of the first terminal device, refer to the descriptions in the foregoing embodiment. Details are not described herein again.

S801: An application function network element obtains the willingness information of the first terminal device.

In this embodiment of this application, the application function network element may perform S801 by using a plurality of solutions. In some solutions, the application function network element may directly request the willingness information of the first terminal device. In some other solutions, the application function network element may request the willingness configuration parameter of the first terminal device, and determine the willingness information of the first terminal device based on the willingness configuration parameter. The following describes different solutions.

Solution 1: The application function network element requests the willingness information of the first terminal device from a first network element through a second network element. In other words, the application function network element receives the willingness information of the first terminal device from the second network element. For example, in a scenario in which the application function network element cannot directly interact with the first network element, the application function network element may perform S801 by using Solution 1. As shown in FIG. 8A, Solution 1 includes steps S801a1 to S801a5.

S801a1: The application function network element sends a first request to the second network element. The second network element receives the first request from the application function network element. The first request includes an identifier of the first terminal device, and the first request is used to request the willingness information of the first terminal device.

S801a2: The second network element may send a fourth request to the first network element based on the first request. The first network element receives the fourth request from the second network element. The fourth request includes the identifier of the first terminal device, and the fourth request is used to request the willingness information of the first terminal device.

S801a3: The first network element determines the willingness configuration parameter of the first terminal device based on the identifier of the first terminal device, and determines the willingness information of the first terminal device based on the willingness configuration parameter of the first terminal device.

In a first implementation, the first request further includes a service identifier of a target service and an execution rule of the target service. Correspondingly, the fourth request also includes the service identifier of the target service and the execution rule of the target service. In this case, in S801a3, the first network element may determine the willingness configuration parameter of the first terminal device based on the identifier of the first terminal device and the service identifier of the target service. In addition, the first network element may determine the willingness information of the first terminal device through the following steps.

A1: The first network element determines configured willingness information of the first terminal device and a willingness valid rule of the first terminal device based on the willingness configuration parameter of the first terminal device. The configured willingness information of the first terminal device indicates that whether the first terminal device is willing to participate in the target service is configured in the willingness configuration parameter. In this implementation, the configured willingness information is the willingness information configured by the first device into the first network in the embodiment shown in FIG. 6.

A2: The first network element determines the willingness information of the first terminal device based on the configured willingness information of the first terminal device, the willingness valid rule, and the execution rule of the target service. The willingness information of the first terminal device indicates whether the first terminal device is willing, under the execution rule of the target service, to participate in the target service.

Optionally, in A2, when the execution rule of the target service meets the willingness valid rule, content indicated by the configured willingness information of the first terminal device is the same as content indicated by the willingness information of the first terminal device; or when the execution rule of the target service does not meet the willingness valid rule, content indicated by the configured willingness information of the first terminal device is different from content indicated by the willingness information of the first terminal device (namely, the content indicated by the configured willingness information is opposite to the content indicated by the willingness information).

The configured willingness information of the first terminal device is different from the willingness information of the first terminal device. In other words, when the configured willingness information indicates that the first terminal device is willing to participate in the target service, the willingness information of the first terminal device indicates that the first terminal device is unwilling, under the execution rule of the target service, to participate in the target service; or when the configured willingness information indicates that the first terminal device is unwilling to participate in the target service, the willingness information of the first terminal device indicates that the first terminal device is willing, under the execution rule of the target service, to participate in the target service.

For example, when the willingness valid rule includes a willingness valid time period and the execution rule of the target service includes a service execution time period, that the execution rule of the target service meets the willingness valid rule includes: The service execution time period is within the willingness valid time period.

For another example, when the willingness valid rule includes a willingness valid area, and the execution rule of the target service includes a service execution area, that the execution rule of the target service meets the willingness valid rule includes: The service execution area is within the willingness valid area.

For still another example, when the willingness valid rule includes a willingness valid time period and a willingness valid area, and the execution rule of the target service includes a service execution time period and a service execution area, that the execution rule of the target service meets the willingness valid rule includes: The service execution time period is within the willingness valid time period, and the service execution area is within the willingness valid area.

In a second implementation, the first request and the fourth request do not include the execution rule of the target service.

Optionally, the first request and the fourth request may further include the service identifier of the target service. In this case, in S801a3, the first network element may determine the willingness configuration parameter of the first terminal device based on the identifier of the first terminal device and the service identifier of the target service.

In the second implementation, the first network element may determine the willingness information of the first terminal device through the following steps.

B1: The first network element determines configured willingness information of the first terminal device based on the willingness configuration parameter of the first terminal device. The configured willingness information of the first terminal device is the same as the configured willingness information in the first implementation, and is not described herein again.

B2: The first network element uses the configured willingness information of the first terminal device as the willingness information of the first terminal device.

In addition, in the second implementation, the first network element may further determine a willingness valid rule of the first terminal device based on the willingness configuration parameter of the first terminal device, and send a fourth response carrying the willingness valid rule to the second network element, so that the second network element sends the willingness valid rule to the application function network element.

S801a4: The first network element sends the fourth response to the second network element. The second network element receives the fourth response from the first network element. The fourth response includes the willingness information of the first terminal device.

S801a5: The second network element sends a first response to the application function network element based on the fourth response. The application function network element receives the first response from the second network element. The first response includes the willingness information of the first terminal device.

It should be noted that, when the fourth response further includes the willingness valid rule of the first terminal device, the first response also correspondingly includes the willingness valid rule.

Solution 2: The application function network element directly requests the willingness information of the first terminal device from the first network element. In other words, the application function network element receives the willingness information of the first terminal device from the first network element. As shown in FIG. 8A, Solution 2 includes steps S801b1 to S801b3.

S801b1: The application function network element sends a first request to the first network element. The first network element receives the first request from the application function network element. The first request includes an identifier of the first terminal device, and the first request is used to request the willingness information of the first terminal device.

S801b2: The first network element determines the willingness configuration parameter of the first terminal device based on the identifier of the first terminal device, and determines the willingness information of the first terminal device based on the willingness configuration parameter of the first terminal device.

Similar to S801a3 in Solution 1, the first network element may also perform S801b2 by using two implementations.

In a first implementation, the first request may further include the service identifier of the target service and the execution rule of the target service. For a specific process of performing S801b2 by the first network element, refer to the first implementation in Solution 1. Details are not described herein again.

In a second implementation, the first request does not include the execution rule of the target service. Optionally, the first request may further include the service identifier of the target service. For a specific process of performing S801b2 by the first network element, refer to the second implementation in Solution 1. Details are not described herein again.

In addition, in the second implementation, the first network element may further determine the willingness valid rule of the first terminal device, and send the willingness valid rule to the application function network element via the first response.

S801b3: The first network element sends the first response to the application function network element. The application function network element receives the first response from the first network element. The first response includes the willingness information of the first terminal device.

In Solution 3 and Solution 4, the application function network element directly obtains the willingness configuration information of the first terminal device, and determines the willingness information of the first terminal device based on the willingness configuration information. A difference between Solution 3 and Solution 4 lies in that the application function obtains the willingness configuration information of the first terminal device in different manners.

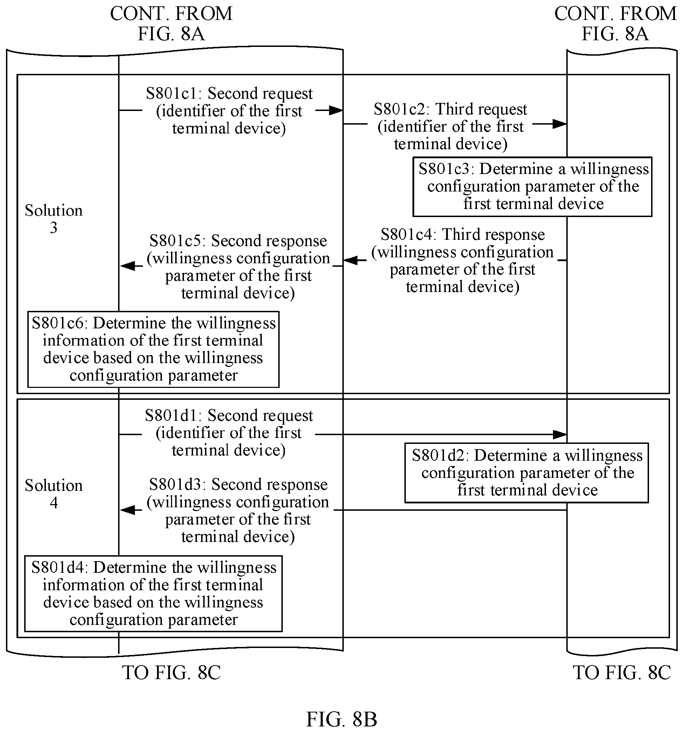

Solution 3: Similar to Solution 1, the application function network element requests the willingness configuration parameter of the first terminal device from the first network element through the second network element. In other words, the application function network element receives the willingness configuration parameter of the first terminal device from the second network element. As shown in FIG. 8B, Solution 3 includes steps S801c1 to S801c6.

S801c1: The application function network element sends a second request to the second network element. The second network element receives the second request from the application function network element. The second request includes the identifier of the first terminal device, and the third request is used to request the willingness configuration parameter of the first terminal device.

S801c2: The second network element may send a third request to the first network element based on the second request. The first network element receives the third request from the second network element. The third request includes the identifier of the first terminal device, and the third request is used to request the willingness configuration parameter of the first terminal device.

S801c3: The first network element determines the willingness configuration parameter of the first terminal device based on the identifier of the first terminal device.

Optionally, the second request and the third request may further include the service identifier of the target service. In this way, in S801c3, the first network element may determine the willingness configuration parameter of the first terminal device based on the identifier of the first terminal device and the service identifier of the target service.

S801c4: The first network element sends a third response to the second network element. The second network element receives the third response from the first network element. The third response includes the willingness configuration parameter of the first terminal device.

S801c5: The second network element sends a second response to the application function network element based on the third response. The application function network element receives the second response from the second network element. The second response includes the willingness information of the first terminal device.

S801c6: The application function network element determines the willingness information of the first terminal device based on the willingness configuration parameter.

In this step, the application function network element may determine the willingness information of the first terminal device by using the second implementation of Solution 1, that is, first determine the configured willingness information of the first terminal device based on the willingness configuration parameter, and then use the configured willingness information as the willingness information of the first terminal device. A specific process is not described herein again.

In addition, the application function network element may further determine the willingness valid rule of the first terminal device based on the willingness configuration parameter of the first terminal device, so that the application function network element may further perform S802 with reference to the willingness valid rule.

Solution 4: The application function network element directly requests the willingness configuration parameter of the first terminal device from the first network element. In other words, the application function network element receives the willingness configuration parameter of the first terminal device from the first network element. As shown in FIG. 8B, Solution 4 includes steps S801d1 to S801d4.

S801d1: The application function network element sends a second request to the first network element. The first network element receives the second request from the application function network element. The second request includes the identifier of the first terminal device, and the second request is used to request the willingness configuration parameter of the first terminal device.

S801d2: The first network element determines the willingness configuration parameter of the first terminal device based on the identifier of the first terminal device.

Optionally, the second request may further include the service identifier of the target service. In this way, in S801d2, the first network element may determine the willingness configuration parameter of the first terminal device based on the identifier of the first terminal device and the service identifier of the target service.

S801d3: The first network element sends a second response to the application function network element. The application function network element receives the second response from the first network element. The second response includes the willingness configuration parameter of the first terminal device.

S801d4: The application function network element determines the willingness information of the first terminal device based on the willingness configuration parameter. This step is the same as 801c6 in Solution 3. Details are not described herein again.

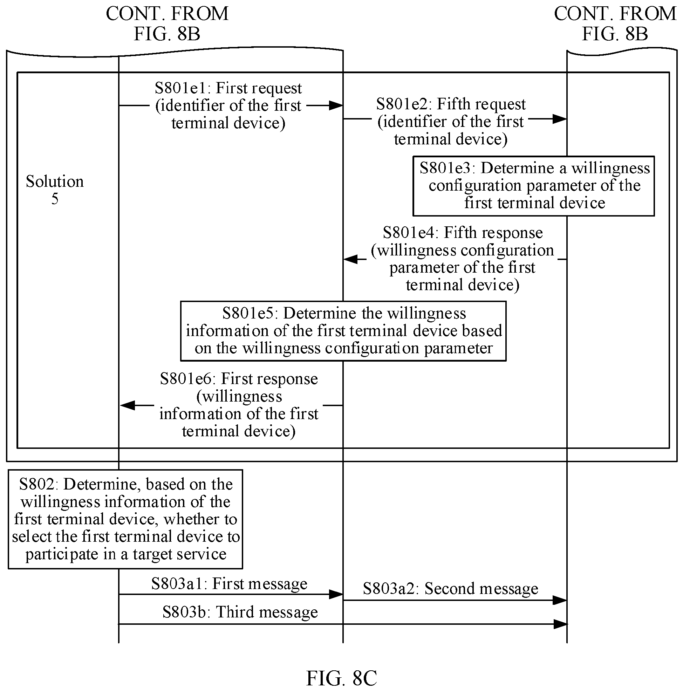

Solution 5: The application function network element obtains the willingness information of the first terminal device through the second network element. For example, in a scenario in which the application function network element cannot directly interact with the first network element, the application function network element may perform S801 by using Solution 5. To be specific, when the application function network element requests the willingness information of the first terminal device, the second network element may first obtain the willingness configuration parameter of the first terminal device from the first network element, and then generate the willingness information of the first terminal device based on the willingness configuration parameter. As shown in FIG. 8C, Solution 5 includes steps S801e1 to S801e6.

S801e1: Similar to S801a1, the application function network element sends a first request to the second network element. The second network element receives the first request from the application function network element. The first request includes the identifier of the first terminal device, and the first request is used to request the willingness information of the first terminal device.

S801e2: The second network element may send a fifth request to the first network element based on the first request. The first network element receives the fifth request from the second network element. The fifth request includes the identifier of the first terminal device, and the fifth request is used to request the willingness configuration parameter of the first terminal device.

In some implementations, the second network element may request, based on a local configuration, the willingness configuration parameter of the terminal device from the first network element after receiving the request for the willingness information of the terminal device from the application function network element.

In some other implementations, the first request may include specific indication information, where the specific indication information indicates the second network element to request the willingness configuration parameter of the first terminal device from the first network element.

In still some implementations, a message type or a name of the first request may indicate the second network element to request the willingness configuration parameter of the first terminal device from the first network element.

S801e3: Similar to S801c3, the first network element determines the willingness configuration parameter of the first terminal device based on the identifier of the first terminal device.

Optionally, the first request and the fifth request may further include the service identifier of the target service. In this way, in S801e3, the first network element may determine the willingness configuration parameter of the first terminal device based on the identifier of the first terminal device and the service identifier of the target service.

S801e4: Similar to S801c4, the first network element sends a fifth response to the second network element. The second network element receives the fifth response from the first network element. The fifth response includes the willingness configuration parameter of the first terminal device.

S801e5: The second network element determines the willingness information of the first terminal device based on the willingness configuration parameter of the first terminal device.

Optionally, similar to execution of the first network element in S801a3 in Solution 1, in Solution 5, the second network element may also perform S801e5 by using two implementations, to determine the willingness information of the first terminal device. For a specific process, refer to the descriptions in S801a3. Details are not described herein again.

Optionally, the second network element may further determine the willingness valid rule of the first terminal device based on the willingness configuration parameter of the first terminal device.

S801e6: The second network element sends a first response to the application function network element. The application function network element receives the first response from the second network element. The first response includes the willingness information of the first terminal device.

It should be noted that, when the second network element further determines the willingness valid rule of the first terminal device in S801e5, the first response also correspondingly includes the willingness valid rule.

In conclusion, the application function network element may obtain the willingness information of the first terminal device by using any one of the foregoing five solutions.

S802: The application function network element determines, based on the willingness information that is of the first terminal device and that is obtained through S801, whether to select the first terminal device to participate in the target service.

Optionally, the application function network element may perform S802 through the following steps:
if the willingness information of the first terminal device indicates that the first terminal device is unwilling to participate in the target service, determining not to select the first terminal device to participate in the target service; or
if the willingness information of the first terminal device indicates that the first terminal device is willing to participate in the target service, obtaining network data and/or application layer data of the first terminal device, and determining, based on the network data and/or the application layer data of the first terminal device, whether to select the first terminal device to participate in the target service (for example, for the process, refer to the descriptions of determining an FL member in Solution 1 above); or selecting the first terminal device to participate in the target service (for example, when the first terminal device is a candidate terminal device previously determined by the application function network element).

In an implementation, when the application function network element further obtains the willingness valid rule of the first terminal device in S801, before performing S802, the application function network element may further determine, based on the willingness valid rule and the execution rule of the target service, that the willingness information of the first terminal device is valid.

Optionally, the willingness information of the first terminal device is valid, that is, the execution rule of the target service meets the willingness valid rule. Examples are described below.

For example, the willingness valid rule includes a willingness valid time period, and the execution rule of the target service includes a service execution time period. When the service execution time period is within the willingness valid time period, the application function network element determines that the willingness information of the first terminal device is valid.

For another example, the willingness valid rule includes a willingness valid area, and the execution rule of the target service includes a service execution area. The application function network element obtains a physical location of the first terminal device, and when the physical location is within the willingness valid area and the service execution area is within the willingness valid area, the application function network element determines that the willingness information of the first terminal device is valid.

For still another example, the willingness valid rule includes a willingness valid time period and a willingness valid area, and the execution rule of the target service includes a service execution time period and a service execution area. The application function network element obtains a physical location of the first terminal device, and when the service execution time period is within the willingness valid time period, the physical location is within the willingness valid area, and the service execution area is within the willingness valid area, the application function network element determines that the willingness information of the first terminal device is valid]

It should be noted that, in the foregoing examples, for a process in which the application function network element obtains the physical location of the first terminal device, refer to an existing process. The physical location may be positioning information determined through a positioning process, cell information of a cell accessed by the first terminal device, or the like. For example, the physical location may be a longitude and a latitude of the first terminal device, GPS location information, the cell accessed by the first terminal device, a tracking area of the first terminal device, or the like.

In an implementation, the application function network element may first perform the foregoing process for the first terminal device when determining that the first terminal device is a terminal device that is a candidate for participating in the target service. In this implementation, before S801, the method may further include the following steps:
C1: The application function network element obtains network data and/or application layer data of a plurality of second terminal devices.
C2: The application function network element determines, in the plurality of second terminal devices based on the network data and/or the application layer data of the plurality of second terminal devices, the first terminal device that is a candidate for participating in the target service.

For a process in which the application function network element determines the first terminal device that is the candidate for participating in the target service, refer to descriptions in a conventional technology. Details are not described herein again.

It should be noted that, in Solution 1 to Solution 5 of this embodiment of this application above, the application function network element or the second network element may request the willingness information of the first terminal device or the willingness configuration parameter of the first terminal device by using, but not limited to, two mechanisms: a "request-response" mechanism and a "subscription-notification" mechanism. This is not limited in this application. It should be noted that, in the "subscription-notification" mechanism, in addition to a subscription event or a subscription object (namely, the willingness information or the willingness configuration parameter of the first terminal device), a subscription message may further carry a notification trigger condition or a notification frequency. The first network element or the second network element may send a notification message based on the trigger condition or the notification frequency in the subscription message, so that the application function network element can obtain latest willingness information of the first terminal device, to ensure that when S802 is performed, whether to select the first terminal device to participate in the target service can be determined based on the willingness information of the first terminal device.

It should be further noted that, in this embodiment, the application function network element may alternatively configure willingness information of at least one terminal device into the first network element by using the method provided in the embodiment shown in FIG. 6. For a specific process, refer to the embodiment shown in FIG. 6. Details are not described herein again. Refer to S803a1, S803a2, and S803b in FIG. 8A to FIG. 8C. An example in which the application function network element sends willingness information of a third terminal device to the first network element is used below for brief description.

Optionally, after obtaining the willingness information of the third terminal device, the application function network element may send the willingness information of the third terminal device to the first network element by using the following two implementations. For a process in which the application function network element obtains the willingness information of the third terminal device and a process in which the first network element maintains a willingness configuration parameter of the third terminal device based on the willingness information of the third terminal device, refer to the processes in S601 and S603 in FIG. 6. Details are not described herein again.

In an implementation, the application function network element sends the willingness information of the third terminal device to the first network element through the second network element, and this implementation includes S803a1 and S803a2.

S803a1: The application function network element sends a first message to the second network element, so that the second network element sends a second message to the first network element based on the first message.

The second message includes the willingness information of the third terminal device and an identifier of the third terminal device, and the second message includes the willingness information of the third terminal device and the identifier of the third terminal device.

S803a2: The second network element sends the second message to the first network element based on the first message.

In an implementation, the application function network element directly sends the willingness information of the third terminal device to the second network element, and this implementation includes S803b.

S803b: The application function network element sends a third message to the first network element, where the third message includes the willingness information of the third terminal device and the identifier of the third terminal device.

In the foregoing two implementations, when obtaining willingness association information of the third terminal device, the application function network element may further send the willingness association information of the third terminal device to the first network element, so that the first network element may maintain the willingness configuration parameter of the third terminal device with reference to the willingness association information and the willingness information of the third terminal device. The willingness association information of the third terminal device includes at least one of the following: the service identifier of the target service or a willingness valid rule of the third terminal device.

It should be noted that the application function network element may send the willingness association information of the third terminal device in a manner similar to the foregoing two implementations. Optionally, the application function network element may synchronously send the willingness information of the third terminal device and the willingness association information to the first network element. For example, the first message, the second message, or the third message may further include the willingness association information of the third terminal device.

In conclusion, this embodiment of this application provides a communication method. According to the method, the application function network element may obtain willingness information of a terminal device, and determine, based on the willingness information, whether to select the terminal device to participate in a target service. In this way, user experience of participating in the target service can be improved.

It should be noted that the embodiment provided in FIG. 6 or FIG. 8A to FIG. 8C is described by using the first terminal device as an example. During actual application, the foregoing method may be simultaneously performed for a plurality of terminal devices. For example, the first device may simultaneously configure willingness information of a plurality of terminal devices to the network side, and the application function network element may also simultaneously request to obtain the willingness information of the plurality of terminal devices or willingness configuration parameters of the plurality of terminal devices at the same time. For a specific process, refer to the descriptions in the foregoing embodiments. Details are not described herein again.

It should be further noted that in the foregoing embodiments, in a process in which the application function network element interacts with a data storage network element through a network exposure function network element, the network exposure function network element may perform legitimacy check on the application function network element, and complete subsequent steps when determining that the application function network element is legit.

In addition, the network exposure function network element may maintain a mapping relationship between a first identifier and a second identifier of each terminal device. Therefore, before the network exposure function network element forwards a received message to the data storage network element, the network exposure function network element may further convert a first identifier of a terminal device in the message into a second identifier of the terminal device, so that the data storage network element can identify that the message is sent for the terminal device. Correspondingly, before the network exposure function network element forwards, to the application function network element, a message received from the data storage network element, the network exposure function network element may also convert a second identifier in the message into a first identifier of a terminal device, so that the application function network element can identify that the message is sent for the terminal device.

Based on the solution provided in the embodiment shown in FIG. 6, this application further provides Embodiment 1 to Embodiment 3. Embodiment 1 to Embodiment 3 are all described by using an example in which willingness information of a UE 1 that indicates whether the UE 1 is willing to participate in an Fl service is configured into a data storage network element (a UDR or a UDM) of a mobile communication system. The following describes the embodiments with reference to the accompanying drawings. It should be noted that for distinguishing and description, some messages in Embodiment 1 to Embodiment 3 are also re-sorted and named based on an appearance sequence.

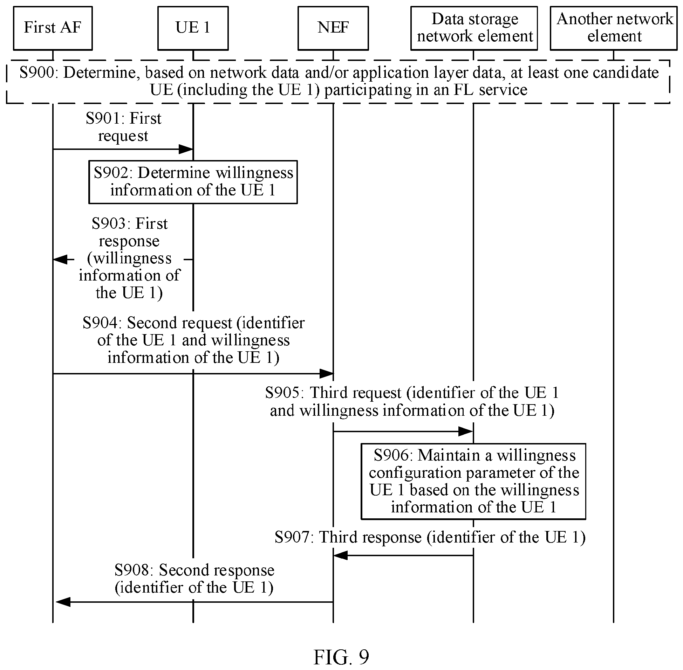

Embodiment 1: A first AF configures the willingness information of the UE 1 into the data storage network element through an NEF, as shown in FIG. 9. For example, in a scenario in which the mobile communication system does not support direct interaction between the first AF and the data storage network element, the first AF may configure the willingness information of the UE 1 into the data storage network element through this embodiment.

S900: Optionally, the first AF may determine, based on a local candidate FL member selection policy and network data of a plurality of UEs that is obtained from another network element and/or application layer data of the plurality of UEs, at least one candidate UE participating in the FL service. The at least one candidate UE includes the UE 1.

Optionally, the another network element may include, but is not limited to, an NWDAF, an AMF, an SMF, a UPF, a UDM, an OAM, and the like. For details, refer to the foregoing descriptions of the network data of the terminal device in (6) above. Details are not described herein again.

It should be noted that, in this embodiment, S900 is an optional step. To be specific, after determining the at least one candidate UE participating in the FL service, the first AF may perform a subsequent step for each candidate UE to configure willingness information of each candidate UE into the data storage network element of the mobile communication system.

Certainly, the first AF may alternatively not perform S900. To be specific, when the first AF does not determine that the UE 1 is a candidate UE participating in the FL service, the first AF performs a subsequent step for the UE 1. For example, when the first AF determines that the UE 1 is located in a service execution area of the FL service, the first AF configures the willingness information of the UE 1 into the data storage network element. For another example, when the first AF determines that remaining traffic of the UE 1 exceeds a set threshold, the first AF configures the willingness information of the UE 1 into the data storage network element.

S901: The first AF may send a first request to the UE 1 through an application layer, where the first request is used to obtain the willingness information of the UE 1. The willingness information of the UE 1 indicates whether the UE 1 is willing to participate in the FL service, that is, whether the UE 1 is willing to join an FL group (Group).

Optionally, the first request may carry at least one of the following:
an execution rule of the FL service, a service identifier of the FL service, or a volume of data whose transmission is for performing the FL service.

The execution rule of the FL service may include at least one of the following:
(1) a service execution time period of the FL service (Time period of FL operation): a time period in which an FL operation (for example, model training or model inference) is performed; or
(2) a service execution area of the FL service (area where FL is performed): a specific area on which the FL operation is performed. For example, if the AF determines to perform the FL operation for some UEs within Shanghai, the AF does not select UEs in a non-Shanghai area to join the FL Group. If a UE joins the FL Group at the beginning but leaves Shanghai in the middle, the UE is deleted from the FL Group.

The volume of data whose transmission is for performing the FL service (Volume of traffic to be transferred) is a volume of data whose transmission by the UE 1 is needed for the FL operation. For example, in a time period in which the FL operation is performed, the UE 1 needs to transmit data of 500 Mb.

Optionally, the first request may further include query indication information (Would you like to join the FL Group), where the query indication information is used to query whether the UE 1 is willing to participate in the FL service.

S902: The UE 1 determines, based on the first request, whether the UE 1 is willing to participate in the FL service, and generates the willingness information of the UE 1.

Optionally, the willingness information (Participate in FL Authorization Indication) of the UE 1 may be a bit sequence of at least one bit. When a value of the bit sequence is a first value, it indicates that the UE 1 is unwilling to participate in the FL service. When the value of the bit sequence is a second value, it indicates that the UE 1 is willing to participate in the FL service. For example, the willingness information of the UE is a 1-bit binary number. When a value of the binary number is "0", it indicates that the UE 1 is unwilling to participate in the FL service. When the value of the binary number is "1", it indicates that the UE 1 is willing to participate in the FL service.

In another implementation, the willingness information of the UE 1 may only indicate that the UE 1 is willing to participate in the FL service. When the UE 1 is unwilling to participate in the FL service, the UE 1 sends another piece of willingness information indicating that the UE 1 is unwilling to participate in the FL service to the first AF, or the UE 1 does not send any indication to the first AF.

Optionally, in this step, the UE 1 may determine the willingness information of the UE 1 in, but limited to, the manner a or the manner b in S6012 in the embodiment shown in FIG. 6. For a specific process, refer to the foregoing related descriptions. Details are not described herein again.

Optionally, the UE 1 may further generate a willingness valid rule of the UE 1 based on the first request. The willingness valid rule may include a willingness valid time period or a willingness valid area.

S903: The UE 1 sends a first response that carries the willingness information of the UE 1 to the first AF through the application layer.

Optionally, the first response may further include the willingness valid rule of the UE 1.

It should be further noted that the first AF may send the first request to the UE 1 periodically or at scheduled time, to obtain latest willingness information of the UE 1.

S904: The first AF may send a second request to the NEF. The second request includes the willingness information of the UE 1 and an identifier of the UE 1, and the second request is used to request the data storage network element to maintain a willingness configuration parameter of the UE 1 based on the willingness information of the UE 1.

Optionally, in this embodiment, the first AF may send the second request to the NEF through a service-oriented interface.

In this embodiment, the identifier of the UE 1 in the second request may be a first identifier (namely, an external identifier) of the UE 1, for example, a GPSI.

Optionally, the second request may further carry the following content: the service identifier of the FL service or the willingness valid rule of the UE 1. The two pieces of content may be collectively referred to as willingness association information of the UE 1.

For example, the second request includes a service type (service type) field. When service type=FL, it indicates that the willingness information of the UE 1 is for the FL service. Certainly, when the first AF performs the method for another service, the service type may alternatively be replaced with a corresponding service identifier. For example, service type=Distributed Learning in the second request indicates that the willingness information of the UE 1 is for a distributed learning service.

Optionally, the willingness valid rule of the UE 1 in the second request may be obtained by the first AF in a process of obtaining the willingness information of the UE 1 through S901 to S903, or may be determined by the first AF. This is not limited in this application.

Optionally, the willingness valid rule of the UE 1 may include the willingness valid time period and/or the willingness valid area.

The willingness valid time period (valid time period) indicates a valid time period of the willingness information of the UE 1. For example, when valid time period=[2022/07/26-01:00, 2022/07/26-05:00], and the willingness information of the UE 1 indicates that the UE 1 is willing to participate in the FL service, it indicates that the UE 1 is willing to participate in the FL service in the time period from 01:00 to 05:00 on July 26, 2022. For another example, when valid time period=[2022/07/26-11:00, 2022/07/26-13:00], and the willingness information of the UE 1 indicates that the UE 1 is unwilling to participate in the FL service, it indicates that the UE 1 is unwilling to participate in the FL service in the time period from 11:00 to 13:00 on July 26, 2022 (the UE 1 may participate in the FL service in a time period other than the time period).

The willingness valid area (valid area) is a valid area of the willingness information of the UE 1. Optionally, the willingness valid area may be a network area (for example, a tracking area (tracking area) list or a cell (cell) list), or may be a geographical area (for example, a longitude and latitude range corresponding to the Shanghai Pudong New District). For example, when the willingness valid area is a network area, for example, valid area=(TA 1, TA 2, TA 3), and the willingness information of the UE 1 indicates that the UE 1 is willing to participate in the FL service, it indicates that the UE 1 is willing to participate in the FL service in areas corresponding to the TA 1, the TA 2, and the TA 3. For another example, when the valid area corresponds to a geographical area, for example, valid area=(Shanghai Pudong New District), and the willingness information of the UE 1 indicates that the UE 1 is unwilling to participate in the FL service, it indicates that the UE 1 is unwilling to participate in the FL service in an area corresponding to the Shanghai Pudong New District.

In an implementation, when S904 is performed, the first AF may further include, in the second request, maintenance information indicating a maintenance manner. The maintenance manner may include: creating (Create) the willingness configuration information, updating (Update) the willingness configuration parameter, or deleting (Delete) the willingness configuration parameter.

In another implementation, the first AF may determine, based on the willingness information of the UE 1, a manner of maintaining the willingness configuration parameter of the UE 1 by the data storage network element, and then generate the second request of a message type corresponding to the maintenance manner.

By using the foregoing two implementations, the first AF may request to send, to the NEF, the manner of maintaining the willingness configuration parameter of the UE 1 by the data storage network element, so that the NEF may notify the data storage network element of the maintenance manner requested by the first AF.

A complete "service" is represented as Nnf type (network element type)_NF service (service name)_NF service operation (service operation). The service requested by the second request is provided by the NEF. Therefore, a type of a network element that subscribes to the service is the NEF, a service name is ServiceParameter (that is, a service related to a service parameter is provided), and a service operation is Create/Update/Delete (that is, create/update/delete). Therefore, the complete "service" may be represented as "Nnef_ServiceParameter_Create/Update/Delete". Therefore, the second request may be implemented by using a request corresponding to a corresponding service operation. Examples are described below.

Example 1: If the first AF obtains the willingness information of the UE 1 for the first time, the second request sent by the first AF may be a Nnef_ServiceParameter_Create Request, so that the willingness configuration parameter of the UE 1 may be created in the data storage network element through the NEF by using a create service operation.

Example 2: After the willingness configuration parameter of the UE 1 is created in the data storage network element in example 1, if the first AF subsequently finds that the willingness information of the UE 1 changes (for example, the original willingness information of the UE 1 indicates that the UE 1 is willing to participate in the FL service, but the new willingness information indicates that the UE 1 is no longer willing to participate in the FL service; or the UE 1 is previously willing to participate in the FL service in the time period corresponding to [2022/07/26-01:00, 2022/07/26-05:00], but is now willing to participate in the FL service in the time period corresponding to [2022/07/27-01:00, 2022/07/27-05:00]; or the UE 1 is previously willing to participate in the FL service in the network areas corresponding to the TA 1, the TA 2, and the TA 3, but is now willing to participate in the FL service in network areas corresponding to the TA 3, a TA 4, and a TA 5), the second request sent by the first AF may be a Nnef_ServiceParameter_Update Request, so that the willingness configuration parameter of the UE 1 may be updated in the data storage network element through the NEF by using an update service operation.

Example 3: After the willingness configuration parameter of the UE 1 is created in the data storage network element in Example 1, if the first AF finds that the willingness information of the UE 1 indicates that the UE 1 is unwilling to participate in the FL service (or is unwilling to participate in the FL service in any time period or any area), the second request sent by the first AF may be a Nnef_ServiceParameter_Delete Request, so that the willingness configuration parameter of the UE 1 may be deleted from the data storage network element through the NEF by using a delete service operation.

S905: After receiving the second request of the first AF, the NEF sends a third request to the data storage network element based on the second request. The third request includes the willingness information of the UE 1 and the identifier of the UE 1, and the third request is used to request the data storage network element to maintain the willingness configuration parameter of the UE 1 based on the willingness information of the UE 1.

In this step, the NEF may forward, to the data storage network element, the request that is from the first AF and that is for maintaining the willingness configuration parameter of the UE 1.

Optionally, when the second request includes the willingness association information of the UE 1 (namely, the service identifier of the FL service or the willingness valid rule of the UE 1), the third request also includes the willingness association information correspondingly.

Optionally, in consideration of security of the mobile communication system, after receiving the second request of the first AF, the NEF may perform verification on legitimacy of the first AF. For example, when the first AF is a third-party application function, in consideration of security, interaction between the first AF and each core network element in the mobile communication system and interaction between the first AF and the OAM need to be implemented through the NEF, and the NEF performs verification on legitimacy of a message from the first AF and legitimacy of a message sent to the first AF. For example, before performing S905, the NEF may check whether the first AF is allowed to create/update/delete the willingness configuration parameter of the UE 1 in the data storage network element.

In conclusion, the NEF may perform an authorization check on the second request of the first AF, that is, check whether the first AF can send the second request to the mobile communication system. If the authorization check succeeds, the NEF forwards the operation to the data storage network element. If the authorization check fails, the NEF rejects the second request of the first AF, that is, none of subsequent steps S905 to S908 is performed.

Similar to S904, the NEF may also send the third request to the data storage network element through a service-oriented interface. For example, if the data storage network element is a UDR, when the second request is a Nnef_ServiceParameter_Create/Update/Delete Request, the third request may be a Nudr_DM_Create/Update/Delete Request, so that the willingness configuration parameter of the UE 1 may be maintained in the data storage network element by using a create/update/delete service operation.

In some implementations, the NEF may store a mapping relationship between the first identifier (external identifier) of the UE 1 and a second identifier (internal identifier) of the UE 1. Therefore, after receiving the second request of the first AF, the NEF converts the first identifier of the UE 1 in the second request into the second identifier. If the mapping relationship is not stored in the NEF, the NEF may first convert the first identifier of the UE 1 into a set external identifier, then determine a set internal identifier based on a mapping relationship between the set external identifier and the set internal identifier, and then request, from a data storage network (for example, a UDR), to obtain the second identifier corresponding to the set internal identifier, to convert the first identifier of the UE 1 in the second request into the second identifier.

For example, the first identifier of the UE 1 is a GPSI of the UE 1, and the second identifier of the UE 1 may be an SUPI. The set external identifier may be an External GPSI, and the set internal identifier may be an Inter GPSI.

S906: After receiving the third request, the data storage network element maintains the willingness configuration parameter of the UE 1 based on the third request.

Optionally, the data storage network element may perform a corresponding operation of creating/updating/deleting the willingness configuration parameter of the UE 1 based on the third request.

In S906, if the third request further includes the willingness association information of the UE 1, the data storage network element may maintain the willingness configuration parameter of the UE 1 based on information such as the willingness information of the UE 1, the identifier of the UE 1, and the willingness association information of the UE 1 (namely, the service identifier of the FL service or the willingness valid rule of the UE 1).

S907: The data storage network element sends a third response to the NEF. The third response may include the identifier of the UE 1, and the third response indicates a result of maintaining the willingness configuration parameter of the UE 1 by the data storage network element.

For example, the third response may include an indication indicating a success or a failure of performing the maintenance operation by the data storage network element.

Optionally, the identifier of the UE 1 in the third response is the second identifier of the UE 1.

For example, when the third request is the Nudr_DM_Create/Update/Delete Request, correspondingly, the third response may be a Nudr_DM_Create/Update/Delete Response.

S908: The NEF sends a second response to the first AF based on the third response. The second response may include the identifier of the UE 1, and the second response indicates a result of maintaining the willingness configuration parameter of the UE 1 by the data storage network element.

Corresponding to S905, in consideration of security, before performing S908, the NEF may perform verification on legitimacy of the first AF. For example, the NEF checks whether the first AF is authorized to obtain the second response. If the first AF is authorized to receive the second response, the NEF performs S908; otherwise, the NEF does not perform S908.

For example, when the second request is the Nnef_ServiceParameter_Create/Update/Delete Request, the second response may be a Nnef_ServiceParameter_Create/Update/Delete Response.

It should be further noted that, similar to S905 in which the NEF converts the identifier of the UE 1, in S908, the NEF may further convert the second identifier of the UE 1 in the third response into the first identifier of the UE 1. In other words, the identifier of the UE 1 in the second response is the first identifier of the UE 1, so that after receiving the second response, the first AF can identify that the message is sent for the UE 1.

According to Embodiment 1, the first AF can configure the willingness information about whether the UE 1 is willing to participate in the FL service into the data storage network element of the mobile communication system. In this way, an FL AF may query the data storage network element for the willingness information of the UE 1 or the willingness configuration parameter of the UE 1, and determine whether to select the UE 1 to participate in the FL service correspondingly.

It should be noted that AFs in the mobile communication system may belong to different vendors, and information acquired by an AF of a vendor is usually difficult to be trusted and used by another vendor. Therefore, the first AF in embodiments of this application may be a special AF, for example, a data collection application function (data collection application function, DCAF). The DCAF is a network element inside the mobile communication system, and may replace FL AFs of other vendors to obtain willingness information from UEs, and configure the acquired willingness information of the UEs into the data storage network element for retrieval and use by the FL AFs of the different vendors.

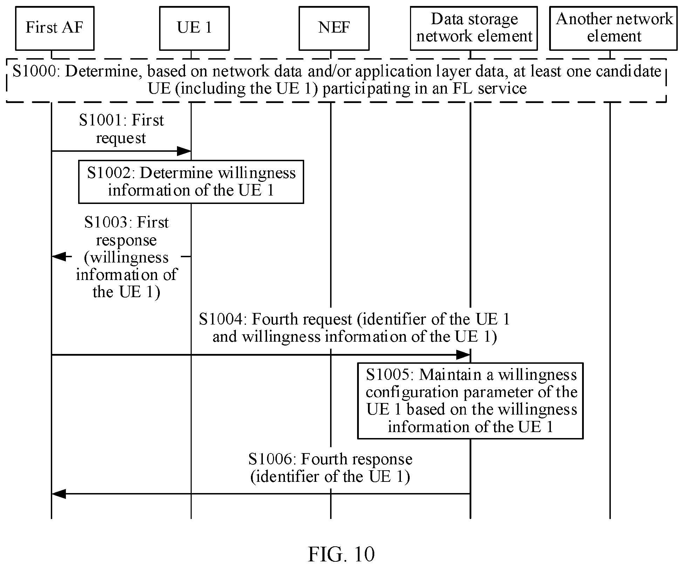

Embodiment 2: A first AF directly configures the willingness information of the UE 1 into the data storage network element, as shown in FIG. 10. For example, when the first AF is an AF trusted by the mobile communication system, the first AF may directly interact with the data storage network element of the mobile communication system without using the NEF. A procedure of Embodiment 2 is similar to that of Embodiment 1, and a difference lies in that the first AF directly sends the willingness information of the UE 1 to the data storage network element without forwarding by the NEF.

S1000 to S1003 are the same as S900 to S903 in Embodiment 1. For same steps, mutual reference may be made. Details are not described herein again.

S1004: The first AF sends a fourth request to the data storage network element. The fourth request includes the willingness information of the UE 1 and the identifier of the UE 1, and the fourth request is used to request the data storage network element to maintain the willingness configuration parameter of the UE 1 based on the willingness information of the UE 1.

Optionally, the first AF may send the fourth request to the data storage network element through a service-oriented interface.

In this embodiment, the identifier of the UE 1 in the fourth request may be a second identifier (namely, an internal identifier) of the UE 1, for example, an SUPI.

Optionally, similar to the second request or the third request in Embodiment 1, the fourth request may further carry the willingness association information of the UE 1 (namely, the service identifier of the FL service or the willingness valid rule of the UE 1). For descriptions of the willingness association information, refer to the corresponding descriptions in Embodiment 1. Details are not described herein again.

For example, the fourth request may be a Nudr_DM_Create/Update/Delete Request, and the first AF may maintain the willingness configuration parameter of the UE 1 in the data storage network element by using a create/update/delete service operation.

S1005: After receiving the fourth request, the data storage network element maintains the willingness configuration parameter of the UE 1 based on the fourth request.

This step is similar to S906 in Embodiment 1. For similarities, refer to each other. Details are not described herein again.

S1006: The data storage network element sends a fourth response to the first AF. The fourth response may include the identifier of the UE 1, and the fourth response indicates a result of maintaining the willingness configuration parameter of the UE 1 by the data storage network element.

For example, when the fourth request is the Nudr_DM_Create/Update/Delete Request, correspondingly, the fourth response may be a Nudr_DM_Create/Update/Delete Response.

According to Embodiment 2, the first AF can configure the willingness information about whether the UE 1 is willing to participate in the FL service into the data storage network element of the mobile communication system. In this way, an FL AF may query the data storage network element for the willingness information of the UE 1 or the willingness configuration parameter of the UE 1, and determine whether to select the UE 1 to participate in the FL service correspondingly.

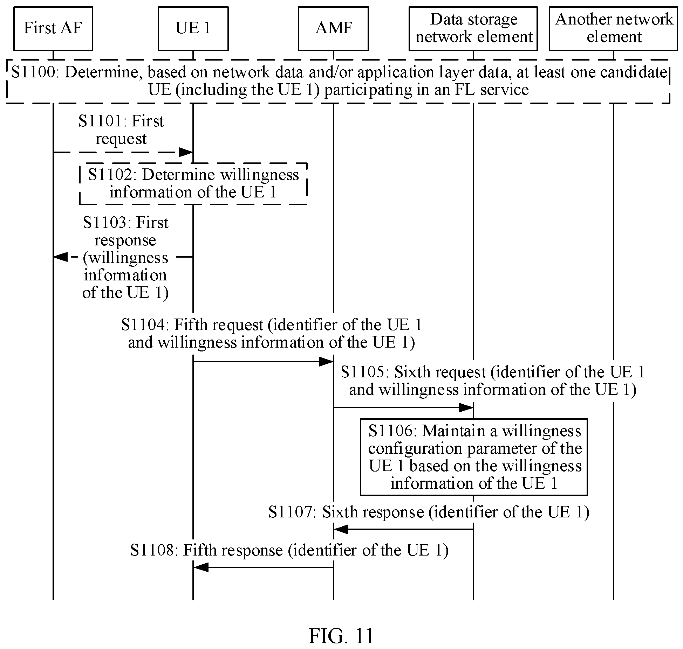

Embodiment 3: The UE 1 may configure the willingness information of the UE 1 to the data storage network element through an AMF, as shown in FIG. 11.

Optionally, in Embodiment 3, the UE 1 may obtain the willingness information of the UE 1 through S1100 to S1103. However, the foregoing steps do not constitute any limitation on a manner of obtaining the willingness information of the UE 1 by the UE 1. For example, the UE 1 obtains the willingness information of the UE 1 configured by a user.

S1100 to S1103 are the same as S900 to S903 in Embodiment 1. For same steps, mutual reference may be made. Details are not described herein again. S1103 is an optional step, and the UE 1 may perform or may not perform S1103.

S1104: The UE 1 sends a fifth request to the AMF. The fifth request includes the identifier of the UE 1 and the willingness information of the UE 1. The fifth request is used to request the data storage network element to maintain the willingness configuration parameter of the UE 1 based on the willingness information of the UE 1.

In this embodiment, the identifier of the UE 1 in the fifth request may be a second identifier (namely, an internal identifier) of the UE 1, for example, an SUPI.

Optionally, the fifth request may further include the willingness association information of the UE 1 (namely, the service identifier of the FL service or the willingness valid rule of the UE 1).

In an implementation, the UE 1 may configure the willingness information of the UE 1 into the data storage network element through a registration procedure. In other words, the fifth request may be a registration request (Registration Request) message of the UE 1.

For example, in this embodiment of this application, the registration procedure initiated by the UE 1 may be the following registration procedure:
(1) Initial registration procedure: When the UE 1 needs to send or receive service data through a core network of the mobile communication system, the UE 1 needs to initiate an initial registration procedure to register with the core network.
(2) Mobility registration update procedure: When the UE 1 is in a connected state or an idle state and moves out of a registration area of the UE 1, or the UE 1 needs to update a capability or a protocol parameter negotiated by the UE 1 during registration, the UE1 initiates the mobility registration update procedure.
(3) Periodic registration update procedure: The UE 1 periodically initiates the periodic registration update procedure based on a periodic registration update timer provided by the AMF.
(4) Emergency registration procedure: The UE 1 initiates the emergency registration procedure when requesting an emergency service.

In another implementation, the UE 1 may further include the willingness information of the UE 1 in a deregistration request message sent to the AMF, a service request (service request) message triggered by the UE 1, a UE configuration update complete (UE Configuration Update) message, a UE capability request (UE Capability request) response message, or a PDU session establishment/modification/release message initiated by the UE 1.

S1105: After receiving the fifth request of the UE 1, the AMF sends a sixth request to the data storage network element based on the fifth request. The sixth request includes the willingness information of the UE 1 and the identifier of the UE 1. The sixth request is used to request the data storage network element to maintain the willingness configuration parameter of the UE 1 based on the willingness information of the UE 1.

In this step, the AMF may forward the willingness information from the UE 1 to the data storage network element.

Optionally, when the fifth request includes the willingness association information of the UE 1, the sixth request also includes the willingness association information correspondingly.

In an implementation, the sixth request is the same as the fifth request.

S1106: After receiving the sixth request, the data storage network element maintains the willingness configuration parameter of the UE 1 based on the sixth request.

This step is similar to S906 in Embodiment 1. For similarities, refer to each other. Details are not described herein again.

S1107: The data storage network element sends a sixth response to the AMF. The sixth response may include the identifier of the UE 1, and the sixth response indicates a result of maintaining the willingness configuration parameter of the UE 1 by the data storage network element.

S1108: The AMF sends a fifth response to the UE 1 based on the sixth response. The fifth response may include the identifier of the UE 1, and the fifth response indicates a result of maintaining the willingness configuration parameter of the UE 1 by the data storage network element.

Optionally, the fifth response may be the same as the sixth response. The fifth response is a response message for the fifth request. Therefore, based on the example described for the fifth request in S1104, the fifth response may be a registration response message, a deregistration response message, a service response message, a PDU session establishment/modification/release response message, or the like.

According to Embodiment 3, the UE 1 can configure the willingness information about whether the UE 1 is willing to participate in the FL service into the data storage network element of the mobile communication system. In this way, an FL AF may query the data storage network element for the willingness information of the UE 1 or the willingness configuration parameter of the UE 1, and determine whether to select the UE 1 to participate in the FL service correspondingly.

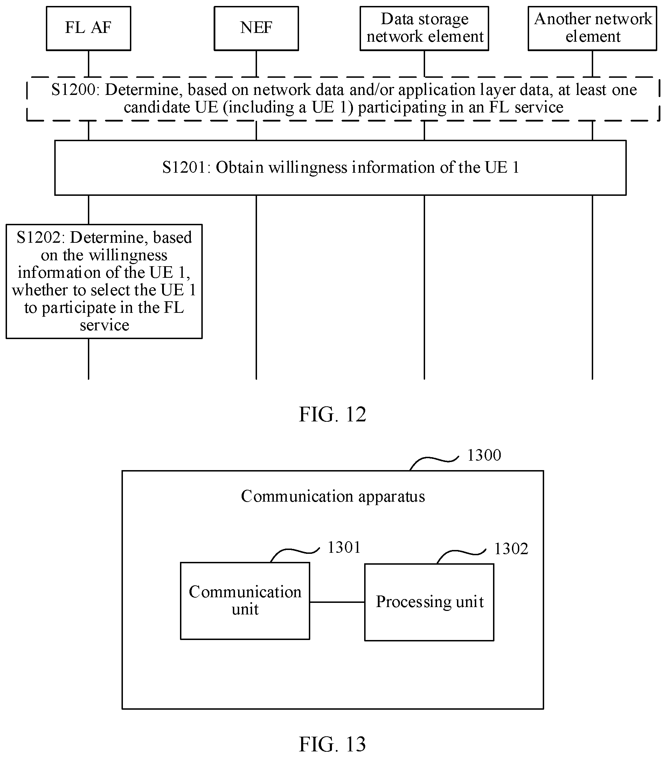

Based on the solution provided in the embodiment shown in FIG. 8A to FIG. 8C, this application further provides Embodiment 4 below. When the first AF or the UE 1 configures the willingness information of the UE 1 into the data storage network element according to any one of the embodiments in FIG. 9 to FIG. 11, the FL AF may obtain the willingness information of the UE 1 or the willingness configuration parameter of the UE 1 from the data storage network element, and then determine, based on the willingness information of the UE 1, whether to select the UE 1 to participate in the FL service. The following describes Embodiment 4 with reference to FIG. 12.

### Embodiment 4:

S1200: Similar to S900, an FL AF that implements an FL service may determine, based on a local candidate FL member selection policy and network element data of a plurality of UEs that is obtained from another network element and/or application layer data of the plurality of UEs, at least one candidate UE participating in the FL service. The at least one candidate UE includes the UE 1.

Through S1200, the FL AF may determine a group of candidate UEs by using a conventional method. Network data or application layer data of the candidate UEs shows that the UEs can implement the FL service.

Optionally, the another network element may include, but is not limited to, an NWDAF, an AMF, an SMF, a UPF, a UDM, an OAM, and the like. For details, refer to the foregoing descriptions of the network data of the terminal device in (6) above. Details are not described herein again.

It should be noted that, in Embodiment 4 of this application, S1200 is an optional step, and the FL AF may alternatively not perform S1200.

S1201: The FL AF may obtain the willingness information of the UE 1 by using any one of Solution 1 to Solution 5 recorded in S801 in the embodiment shown in FIG. 8A to FIG. 8C.

For a specific implementation process of S1201, refer to the descriptions in S801. Details are not described herein again.

S1202: The FL AF determines, based on the willingness information of the UE 1, whether to select the UE 1 to participate in the FL service.

In an implementation, when the UE 1 is a candidate UE, that is, the FL AF performs S1200, the FL AF directly determines, based on an indication of the willingness information of the UE 1, whether to select the UE 1 to participate in the FL service. If the willingness information of the UE 1 indicates that the UE 1 is unwilling to participate in the FL service, the FL AF does not select the UE 1 to participate in the FL service. If the willingness information of the UE 1 indicates that the UE 1 is willing to participate in the FL service, the FL AF may select the UE 1 to participate in the FL service.

In another implementation, when the FL AF does not perform S1200, if the willingness information of the UE 1 indicates that the UE 1 is unwilling to participate in the FL service, the FL AF does not select the UE 1 to participate in the FL service. If the willingness information of the UE indicates that the UE 1 is willing to participate in the FL service, the FL AF obtains network element data of the UE 1 and/or application layer data of the UE 1 from another network element, and determines, based on a set FL member selection policy and the network element data and/or the application layer data of the UE 1, whether to select the UE 1 to participate in the FL service.

It should be further noted that each step in the foregoing embodiments may be performed by a corresponding device, or may be performed by a component such as a chip, a processor, or a chip system in the device. This is not limited in embodiments of this application. The foregoing embodiments are described only by using an example in which steps are executed by corresponding devices. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenario described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, which is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on the same technical concept, this application further provides a communication apparatus. The communication apparatus may be used in a communication network/system, as shown in FIG. 2A or FIG. 2B. The communication apparatus is configured to implement the method provided in the foregoing embodiments. The communication apparatus may be the network element or the device in the foregoing embodiments, for example, the AF, the NEF, the UE, or the data storage network element. Refer to FIG. 13. A communication apparatus 1300 includes a communication unit 1301 and a processing unit 1302.

The communication unit 1301 is configured to receive and send data. Optionally, the communication unit 1301 may include a transceiver or a communication interface.

The processing unit 1302 is configured to perform steps performed by any network element or device in the communication method provided in the foregoing embodiments. For a specific function of the processing unit 1302, refer to related descriptions in the foregoing embodiments. Details are not described herein again.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The computer software product is stored in a storage medium and includes several instructions for instructing a computer device (which may be a personal computer, a server, a network device) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

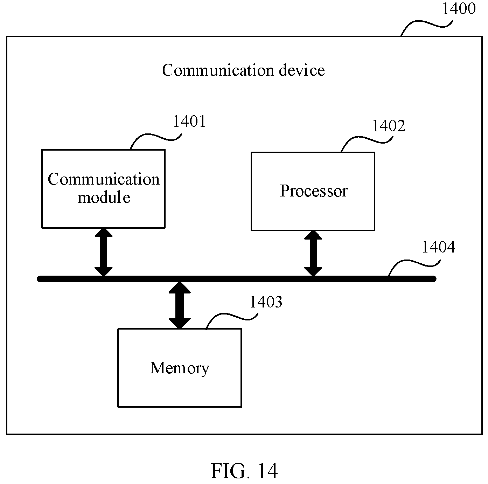

Based on the foregoing embodiments, an embodiment of this application further provides a communication device. The communication device may be a network element or a device in a communication network/system, for example, an AF, an NEF, a UE, or a data storage network element. The communication device can implement the method in the foregoing embodiments, and has a function of the communication apparatus 1300. Refer to FIG. 14. The communication device 1400 includes a communication module 1401, a processor 1402, and a memory 1403. The communication module 1401, the processor 1402, and the memory 1403 are connected to each other.

Optionally, the communication module 1401, the processor 1402, and the memory 1403 are connected to each other through a bus 1404. The bus 1404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not mean that there is only one bus or only one type of bus.

The communication module 1401 is configured to receive and send data, to implement communication with another device. Optionally, the communication module 1401 may include a transceiver or a communication interface. For example, when the communication device 1400 is a UE, the communication module 1401 is a transceiver. When the communication device 1400 is a network element like an AF, an NEF, or a data storage network element, the communication module 1401 may be a communication interface.

For a function of the processor 1402, refer to the descriptions in the foregoing embodiments. Details are not described herein again.

The processor 1402 may be a central processing unit (central processing unit, CPU), a network processor (network processor, NP), a combination of a CPU and an NP, or the like. The processor 1402 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The function may be implemented by the processor 1402 by using hardware, or may be implemented by executing corresponding software by using hardware.

The memory 1403 is configured to store program instructions, data, and the like. Specifically, the program instructions may include program code, and the program code includes computer operation instructions. The memory 1403 may include a random access memory (random access memory, RAM), or may include a non-volatile memory (non-volatile memory), for example, at least one magnetic disk memory. The processor 1402 executes the program instructions stored in the memory 1403, to implement the foregoing functions, thereby implementing the method provided in the foregoing embodiments.

Based on the foregoing embodiments, an embodiment of this application further provides a computer program product. The computer program product includes a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

Optionally, the computer may include but is not limited to a network element or a device in a communication network/system, for example, an AF, an NEF, a UE, or a data storage network element.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read the computer program stored in the memory, to implement the method provided in the foregoing embodiments.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide the communication method and the apparatus. By using the method, an application function network element may obtain willingness information of a terminal device, and determine, based on the willingness information, whether to select the terminal device to participate in a target service. In this way, user experience can be improved.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. A communication method, applied to an application function network element and comprising:
obtaining willingness information of a first terminal device, wherein the willingness information of the first terminal device indicates whether the first terminal device is willing to participate in a target service; and
determining, based on the willingness information of the first terminal device, whether to select the first terminal device to participate in the target service.

2. The method according to claim 1, wherein the obtaining willingness information of a first terminal device comprises:
receiving the willingness information of the first terminal device from a first network element or a second network element, wherein
the first network element maintains a willingness configuration parameter of the first terminal device, the willingness configuration parameter represents willingness of the first terminal device to participate in the target service, and the first network element is different from the second network element.

3. The method according to claim 2, wherein the receiving the willingness information of the first terminal device from a first network element or a second network element comprises:
sending a first request to the first network element or the second network element, wherein the first request comprises an identifier of the first terminal device, and the first request is used to request the willingness information of the first terminal device; and
receiving a first response from the first network element or the second network element, wherein the first response comprises the willingness information of the first terminal device.

4. The method according to claim 3, wherein the first request further comprises a service identifier of the target service and an execution rule of the target service; and
the willingness information of the first terminal device indicates whether the first terminal device is willing, under the execution rule of the target service, to participate in the target service.

5. The method according to claim 3 or 4, wherein the first response further comprises a willingness valid rule of the first terminal device; and
before the determining, based on the willingness information of the first terminal device, whether to select the first terminal device to participate in the target service, the method further comprises:
determining, based on the willingness valid rule and the execution rule of the target service, that the willingness information of the first terminal device is valid.

6. The method according to claim 1, wherein the obtaining willingness information of a first terminal device comprises:
obtaining a willingness configuration parameter of the first terminal device, wherein the willingness configuration parameter of the first terminal device represents that the first terminal device participates in a service of the target service; and
determining the willingness information of the first terminal device based on the willingness configuration parameter.

7. The method according to claim 6, wherein the method further comprises: determining a willingness valid rule of the first terminal device based on the willingness configuration parameter; and
before the determining, based on the willingness information of the first terminal device, whether to select the first terminal device to participate in the target service, the method further comprises:
determining, based on the willingness valid rule and an execution rule of the target service, that the willingness information of the first terminal device is valid.

8. The method according to claim 6 or 7, wherein the obtaining a willingness configuration parameter of the first terminal device comprises:
receiving the willingness configuration parameter of the first terminal device from a first network element or a second network element, wherein
the first network element maintains the willingness configuration parameter of the first terminal device, the willingness configuration parameter represents willingness of the first terminal device to participate in the target service, and the first network element is different from the second network element.

9. The method according to claim 8, wherein the receiving the willingness configuration parameter of the first terminal device from a first network element or a second network element comprises:
sending a second request to the first network element or the second network element, wherein the second request comprises an identifier of the first terminal device, and the second request is used to request the willingness configuration parameter of the first terminal device; and
receiving a second response from the first network element or the second network element, wherein the second response comprises the willingness configuration parameter of the first terminal device.

10. The method according to claim 5 or 7, wherein the determining, based on the willingness valid rule and the execution rule of the target service, that the willingness information of the first terminal device is valid comprises:
if the willingness valid rule comprises a willingness valid time period, and the execution rule of the target service comprises a service execution time period, when the service execution time period is within the willingness valid time period, determining that the willingness information of the first terminal device is valid; or
if the willingness valid rule comprises a willingness valid area, and the execution rule of the target service comprises a service execution area, obtaining a physical location of the first terminal device, and when the physical location is within the willingness valid area and the service execution area is within the willingness valid area, determining that the willingness information of the first terminal device is valid; or
if the willingness valid rule comprises a willingness valid time period and a willingness valid area, and the execution rule of the target service comprises a service execution time period and a service execution area, obtaining a physical location of the first terminal device, and when the service execution time period is within the willingness valid time period, the physical location is within the willingness valid area, and the service execution area is within the willingness valid area, determining that the willingness information of the first terminal device is valid.

11. The method according to any one of claims 2 to 5, 8, or 9, wherein the first network element is a data storage network element, and the second network element is a network exposure function network element.

12. The method according to any one of claims 1 to 11, wherein the method further comprises:
obtaining network data and/or application layer data of a plurality of second terminal devices; and
determining, in the plurality of second terminal devices based on the network data and/or the application layer data of the plurality of second terminal devices, the first terminal device that is a candidate for participating in the target service.

13. The method according to any one of claims 1 to 12, wherein the determining, based on the willingness information of the first terminal device, whether to select the first terminal device to participate in the target service comprises:
if the willingness information of the first terminal device indicates that the first terminal device is unwilling to participate in the target service, determining not to select the first terminal device to participate in the target service; or
if the willingness information of the first terminal device indicates that the first terminal device is willing to participate in the target service, obtaining network data and/or application layer data of the first terminal device, and determining, based on the network data and/or the application layer data of the first terminal device, whether to select the first terminal device to participate in the target service; or if the willingness information of the first terminal device indicates that the first terminal device is willing to participate in the target service, selecting the first terminal device to participate in the target service.

14. The method according to any one of claims 1 to 13, wherein the method further comprises:
obtaining willingness information of a third terminal device, wherein the willingness information of the third terminal device indicates whether the third terminal device is willing to participate in the target service; and
sending the willingness information of the third terminal device to the first network element.

15. The method according to claim 14, wherein the sending the willingness information of the third terminal device to the first network element comprises:
sending a first message to the second network element, to enable the second network element to send a second message to the first network element based on the first message, wherein the first message comprises the willingness information of the third terminal device and an identifier of the third terminal device, and the second message comprises the willingness information of the third terminal device and the identifier of the third terminal device; or
sending a third message to the first network element, wherein the third message comprises the willingness information of the third terminal device and an identifier of the third terminal device.

16. The method according to claim 15, wherein the first message further comprises a willingness valid rule of the third terminal device, the second message further comprises the willingness valid rule of the third terminal device, and the third message further comprises the willingness valid rule of the third terminal device.

17. A communication method, applied to a first network element and comprising:
receiving a request message, wherein the request message comprises an identifier of the first terminal device;
determining a willingness configuration parameter of the first terminal device based on the identifier of the first terminal device, wherein the willingness configuration parameter of the first terminal device represents willingness of the first terminal device to participate in a target service; and
sending a response message, wherein the response message comprises willingness information of the first terminal device or the willingness configuration parameter of the first terminal device, the willingness information of the first terminal device is obtained through configuration based on the willingness of the first terminal device, and the willingness information of the first terminal device indicates whether the first terminal device is willing to participate in the target service.

18. The method according to claim 17, wherein the request message further comprises a service identifier of the target service and an execution rule of the target service;
the determining a willingness configuration parameter of the first terminal device based on the identifier of the first terminal device comprises:
determining the willingness configuration parameter of the first terminal device based on the identifier of the first terminal device and the service identifier of the target service; and
when the response message comprises the willingness information of the first terminal device, before the sending a response message, the method further comprises:
determining configured willingness information of the first terminal device and a willingness valid rule of the first terminal device based on the willingness configuration parameter of the first terminal device, wherein the configured willingness information of the first terminal device indicates that whether the first terminal device is willing to participate in the target service is configured in the willingness configuration parameter; and
determining the willingness information of the first terminal device based on the configured willingness information of the first terminal device, the willingness valid rule, and the execution rule of the target service, wherein the willingness information of the first terminal device indicates whether the first terminal device is willing, under the execution rule of the target service, to participate in the target service.

19. The method according to claim 18, wherein when the execution rule of the target service meets the willingness valid rule, the configured willingness information of the first terminal device is the same as the willingness information of the first terminal device; or
when the execution rule of the target service does not meet the willingness valid rule, the configured willingness information of the first terminal device is different from the willingness information of the first terminal device.

20. The method according to claim 19, wherein
when the willingness valid rule comprises a willingness valid time period and the execution rule of the target service comprises a service execution time period, that the execution rule of the target service meets the willingness valid rule comprises: the service execution time period is within the willingness valid time period; or
when the willingness valid rule comprises a willingness valid area, and the execution rule of the target service comprises a service execution area, that the execution rule of the target service meets the willingness valid rule comprises: the service execution area is within the willingness valid area; or
when the willingness valid rule comprises a willingness valid time period and a willingness valid area, and the execution rule of the target service comprises a service execution time period and a service execution area, that the execution rule of the target service meets the willingness valid rule comprises: the service execution time period is within the willingness valid time period, and the service execution area is within the willingness valid area.

21. The method according to claim 17, wherein when the response message comprises the willingness information of the first terminal device, before the sending a response message, the method further comprises:
determining configured willingness information of the first terminal device based on the willingness configuration parameter of the first terminal device, wherein the configured willingness information of the first terminal device indicates that whether the first terminal device is willing to participate in the target service is configured in the willingness configuration parameter; and
using the configured willingness information of the first terminal device as the willingness information of the first terminal device; and
the method further comprises:
determining a willingness valid rule of the first terminal device based on the willingness configuration parameter of the first terminal device, wherein
the response message further comprises the willingness valid rule of the first terminal device.

22. The method according to any one of claims 17 to 21, wherein the first network element is a data storage network element.

23. A communication method, comprising:
sending, by an application function network element, a second request to a second network element, wherein the second request comprises an identifier of a first terminal device, and the second request is used to request a willingness configuration parameter of the first terminal device;
sending, by the second network element after receiving the second request from the application function network element, a third request to the first network element, wherein the third request comprises the identifier of the first terminal device, and the third request is used to request the willingness configuration parameter of the first terminal device;
receiving, by the first network element, the third request from the second network element, and determining the willingness configuration parameter of the first terminal device based on the identifier of the first terminal device, wherein the willingness configuration parameter of the first terminal device represents willingness of the first terminal device to participate in a target service;
sending, by the first network element, a third response to the second network element, wherein the third response comprises the willingness configuration parameter of the first terminal device;
receiving, by the second network element, the third response from the first network element, and sending a second response to the application function network element, wherein the second response comprises the willingness configuration parameter of the first terminal device; and
receiving, by the application function network element, the second response from the second network element, determining willingness information of the first terminal device based on the willingness configuration parameter, and determining, based on the willingness information of the first terminal device, whether to select the first terminal device to participate in the target service.

24. A communication system, comprising:
an application function network element, configured to send a second request to a second network element, wherein the second request comprises an identifier of a first terminal device, and the second request is used to request a willingness configuration parameter of the first terminal device;
the second network element, configured to send, after receiving the second request from the application function network element, a third request to the first network element, wherein the third request comprises the identifier of the first terminal device, and the third request is used to request the willingness configuration parameter of the first terminal device; and
the first network element, configured to receive the third request from the second network element, and determine the willingness configuration parameter of the first terminal device based on the identifier of the first terminal device, wherein the willingness configuration parameter of the first terminal device represents willingness of the first terminal device to participate in a target service; and send a third response to the second network element, wherein the third response comprises the willingness configuration parameter of the first terminal device, wherein
the second network element is further configured to receive the third response from the first network element, and send a second response to the application function network element, wherein the second response comprises the willingness configuration parameter of the first terminal device; and
the application function network element is further configured to receive the second response from the second network element, determine willingness information of the first terminal device based on the willingness configuration parameter, and determine, based on the willingness information of the first terminal device, whether to select the first terminal device to participate in the target service.

25. A communication apparatus, comprising:
a communication unit, configured to receive and send data; and
a processing unit, configured to perform the method according to any one of claims 1 to 22.

26. A communication device, comprising:
a communication module, configured to receive and send data;
a memory, configured to store program instructions and data; and
a processor, configured to read the program instructions and the data in the memory, to implement the method according to any one of claims 1 to 22.

27. A computer-readable storage medium, wherein the computer-readable storage medium stores a computer program; and when the computer program is run on a computer, the computer is enabled to perform the method according to any one of claims 1 to 22.

28. A chip, wherein the chip comprises a processor and a memory, and the processor is coupled to the memory, and configured to read a computer program stored in the memory, to perform the method according to any one of claims 1 to 22.
